Europäisches Patentamt

European Patent Office

Office européen des brevets

(19)

(11) Publication number: **0 201 848**
**A2**

(12) **EUROPEAN PATENT APPLICATION**

(21) Application number: **86106180.2**

(22) Date of filing: **06.05.86**

(51) Int. Cl.⁴: **G 06 F 12/08**

(30) Priority: **06.05.85 US 730977**

(43) Date of publication of application:
**20.11.86 Bulletin 86/47**

(84) Designated Contracting States:
**BE DE FR GB**

(71) Applicant: **WANG LABORATORIES INC.**
**One Industrial Avenue**
**Lowell, MA 01851(US)**

(72) Inventor: **Whipple, David L.**
**142 Hawthorn Road**
**Braintree, MA. 02184(US)**

(74) Representative: **Behrens, Dieter, Dr.-Ing. et al,**
**Patentanwälte WUESTHOFF-V.**
**PECHMANN-BEHRENS-GOETZ Schweigerstrasse 2**
**D-8000 München 90(DE)**

(54) **Information processing system with enhanced instruction execution and support control.**

(57) An information processing system including a system memory and a processor. A cache for storing a copy of a subset of the information stored in the system memory and providing information therefrom to the processor. The cache includes a cache memory connected from the system memory and to the processor for storing and providing the copies of the information contained in the subset and a write-merge for writing information from the processor to the system memory. The write merge is responsive to a memory write address referring to information contained in the copy of the subset residing in the cache memory for reading the corresponding information from the cache memory, merging the information to be written to the system memory and the corresponding information read from the cache memory, writing the merged information into the cache memory, and providing the merged information to the system memory. The processor includes a microinstruction control means, including microinstruction memory, first microinstruction address means for providing the initial addresses of microinstruction sequences and second microinstruction address means for the sequential selection of microinstructions.

EP 0 201 848 A2

INFORMATION PROCESSING SYSTEM WITH

ENHANCED INSTRUCTION EXECUTION

AND SUPPORT CONTROL


BACKGROUND OF THE INVENTION


1. Field of the Invention


The present invention relates to apparatus and method for enchancing the performance of an information processing system and, more particularly, to apparatus and method for enhancing data fetching, instruction fetching and execution and support operation execution.


2. Description of the Prior Art


A primary limitation in the speed of operation of an information processing system is that imposed by the time required to move information, that is, instructions and data, between memory and the information processing elements. For example, instructions and data must be moved from memory to the processor to be acted upon and the results moved from the processor to memory.


The prior art has used caches and prefetch mechanisms to increase the speed with which instructions and data are moved from memory to the processor but, in general, have not addressed certain related


-1-

problems. The first is not the speed with which instructions and data are encached, but the providing of a smooth flow of instructions and data. That is, increasing the rate at which instructions and data are fetched may not provide an increase in processing speed if the instructions and data are not available and processing must stop to perform instruction and data fetch operations, even if the fetch operations are very fast. The second problem lies in the area of writing information back to memory. That is, in a system employing a cache, the encached information must be continuously updated to correspond to the information in memory. This, however, frequently requires a series of operations which disrupt the smooth flow of data processing operations.

Another problem arises in the execution of "normal" instruction operations in that only the straightforward execution of instructions is enchanced. In most systems, however, the processing elements are required to perform many operations which are related to the execution of instructions but do not directly execute instructions, such as interrupt, trap and branch operations.

Finally, system support operations, such as loading of microcode and diagnostic operations, comprise an important family of data processing related operations and which bear upon the overall performance of the system. The efficiency and power with which such

-2-

support operations are performed thereby effect system performance, but are related to secondary treatment in most systems.

The claimed and described invention addresses these and other related problems of the prior art.

## SUMMARY OF THE INVENTION

The present invention relates to an information processing system including a system memory means for storing information and a processor means for operating on the information, the information including data to be operated upon and instructions for directing the operations of the system. In a first aspect, the invention comprises a cache means for storing a copy of a subset of the information stored in the system memory means and providing information therefrom to the processor means. The cache includes a cache memory means connected from the system memory means and to the processor means for storing and providing the copies of the information contained in the subset and a write-merge means for writing information from the processor means to the system memory means. The write-merge means includes first and second inputs connected from the processor means and the information output of the cache memory means, and an output connected to the system memory means and to the information input of the cache memory means. The write merge means is responsive to a memory write address referring

-3-

to information contained in the copy of the subset residing in the cache memory means for reading the corresponding information from the cache memory means, merging the information to be written to the system memory means and the corresponding information read from the cache memory means, writing the merged information into the cache memory means, and providing the merged information to the system memory means.

In a further aspect of the cache, the cache memory read means further includes a cache memory write means responsive to a read address referring to information not contained in the sub-set for reading the addressed information from the system memory means and writing the information read from the system memory means into the cache memory means to become a part of the subset contained therein. The cache memory write means further includes a cache memory bypass means connected from the cache memory means information input and to the cache memory means information output for providing the information read from the system memory means to the processor means concurrently with the writing of the read information into the cache memory means.

In a further aspect of the invention, the processor includes a fetch means for providing a smooth flow of instructions and operands to the processor. The fetch means including means responsive to operation of the processor means for providing a processor clock

-4-

signal having a first edge at the start of each processor operation, and a second edge during the execution of each processor operation. An address means is responsive to operation of the processor means for providing a next operand address to the memory means at a first edge of the processor clock signal and a next instruction address to the memory means either at a fixed interval after the first edge of the processor clock signal if the address means has provided a next operand address, or at the first edge of the processor clock signal if the address means has not provided a next operand address. The processor means also includes means responsive to the processor clock signal for receiving the next operand from the memory means at the next occurring first edge of the processor clock signal and the next instruction from the memory means at the next occurring second edge of the processor clock signal.

In a further aspect of the fetch mechanism, the processor means includes a central processor means for performing operations on operands, including means responsive to the current instruction for providing a logical next instruction address and instruction processor means for performing operations on instructions, including means for generating a logical next operand address. The address means further includes an address translation means responsive to logical next instruction addresses and logical next operand addresses for providing corresponding next instruction addresses and next operand addresses, next instruction register means responsive

-5-

0201848

to operation of the central processor means for storing and providing a next instruction address, and next operand register means responsive to operation of the instruction processor means for storing and providing a next operand address.

In a still further aspect of the invention, the processor includes a microinstruction control means responsive to the instructions for providing microinstructions for controlling operation of the processor means. The microinstruction control means includes microinstruction memory means responsive to microinstruction addresses for storing and providing the microinstructions, first microinstruction address means responsive to the instructions for providing the initial addresses of microinstruction sequences, and second microinstruction address means responsive to the microinstructions for the sequential selection of microinstructions. The microinstruction control means further includes test condition means for performing tests upon defined conditions of operation of the system and providing an output indicating whether the result of a test is true or false. The second microinstruction address means is responsive to the test output to provide a next microinstruction address if a test is true, and the first microinstruction address means being responsive to the test output to provide a new initial microinstruction address if a test is false.

-6-

The system further includes a system control means for performing support operations, at least one data processing element including data processing means and microcode control means, and support bus means connected from the system control means for conducting information between the system control means and the data processing elements. The processing element includes a support means, having a command register means connected from the support bus means for transferring command words between the element support means and the support bus means, wherein certain of the command words containing control words containing information directing a current mode of operation of the processing element. A control register means is connected from the command register means for storing a control word, and support microcode means is responsive to a command word and a related control word for providing microroutines for controlling a support operation. The processing element microcode control means is responsive to a control word for transferring control of the processing element to the support microcode means.

Each command word includes a first section containing a target field identifying a recipient processing element and a command field identifying a support operation to be executed by the target processing element, and a second section containing either a control word, or an information field containing information to be communicated as a result of a current support operation. The information field may contains a microinstruction address in the

-7-

processing element microcode control means, a microinstruction read from to to be written into the processing element microcode control means, or data read from or to be written into the data processing means. Each control word includes a mode field containing a bit indicating that the processing element is to operate in a command mode, and wherein operation of the processing element is controlled by the support means.

Other objects, advantages and features of the present invention will be understood by those of ordinary skill in the art after referring to the following detailed description of the preferred embodiment and drawings, wherein:

## BRIEF DESCRIPTION OF THE DRAWINGS

Fig. 1 is a block diagram of a computer system incorporating the present invention;

Figs. 2 are diagrammic representations of certain central processor and main memory structures;

Figs. 3A to 3I are diagrammic representations of certain system instruction structures;

Figs. 4 is a diagrammic representations of a program control word;

Figs. 5A, 5B and 5C are diagrammic representations of virtual to physical address translation;

Fig. 6 is a block diagram CPU 122;

Fig. 6A is a block diagram of MS 604;

Fig. 6B is a block diagram of CPU-SLI 666;

Fig. 6C is a diagrammic representation of SL bus 120;

Fig. 7 is a block diagram of AGU 124;

Fig. 7A is a diagram of IQ 702 and IL 704;

Fig. 8 is a block diagram of ATU/C 126; and

Fig. 8A is an illustration of instruction and data fetching

## DESCRIPTION OF A PREFERRED EMBODIMENT

The following description presents the structure and operation of a computer system incorporating a presently preferred embodiment of the present invention. In the following description, the overall structure and operation of the system will first be presented at an overall block diagram level. Then certain fundamental features and principles of operation of the system, such as data, instruction, address, program control word and interrupt structures and operations, will be described. The description of the system will then continue at a more detailed block diagram level, extending to

-9-

descriptions at yet more detailed levels where such would assist those of ordinary skill in the art in further understanding the present invention.

Certain reference number and drawing conventions are used throughout the following descriptions to enhance the clarity of presentation. First, where related portions of the system or related information is presented upon two or more pages of drawings, those drawing pages will be referred to by a single, common figure number and the drawing pages therein individually identified by appended letter designations. For example, a Figure 10 may be comprised of three pages, which will then be referred to as Figs. 10A, 10B and 10C.

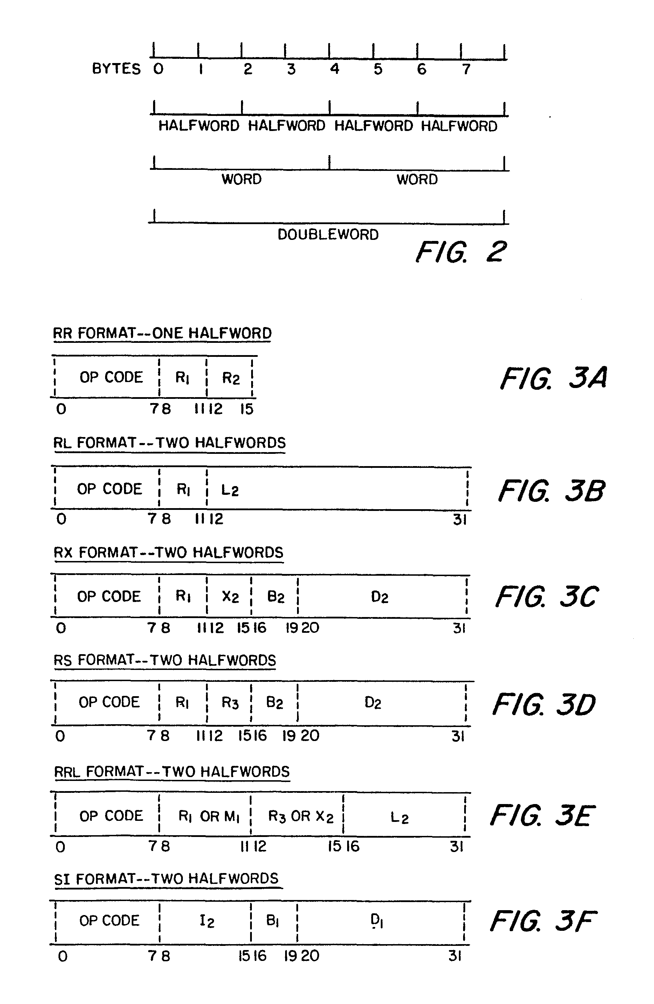

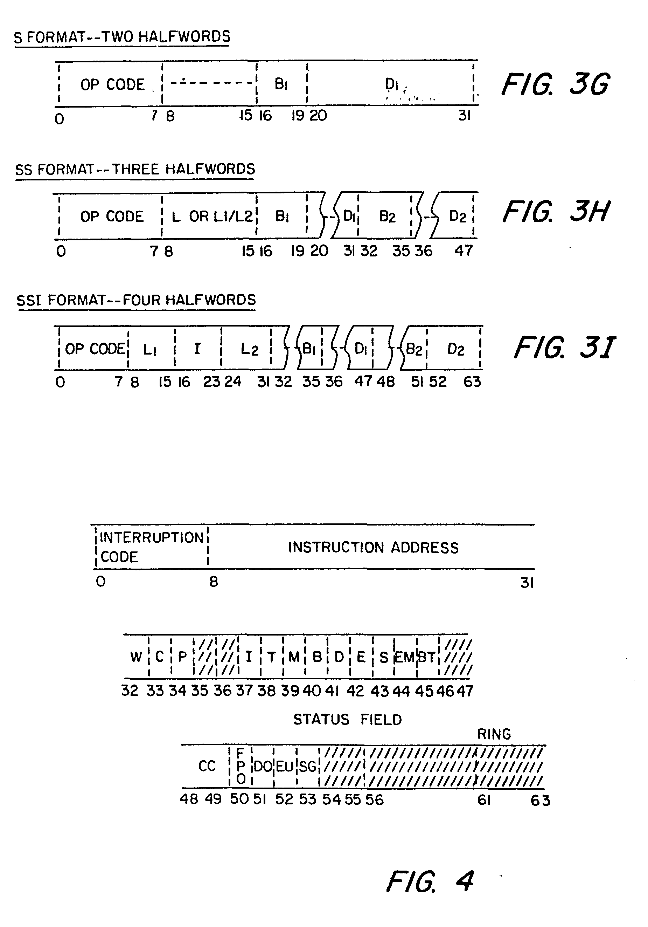

Interconnections between related portions of the system may be indicated in either of two ways. First, to enhance clarity of presentation, interconnections between portions of the system may be indicated by common signal names or references rather than by drawn wires or busses. Secondly, certain figures comprised of multiple drawing pages may be drawn so that the drawing pages comprising that figure may be placed side by side, in the sequence designated by the letter designations of the drawing pages, to comprise a single large figure. In this case, certain busses and connections may be drawn to connect at the edges of the drawing pages and the busses and connections may connect or pass across one or more drawing pages. Reference numbers referring to system elements appearing in the figures are comprised of three or four digits. The two least significant (rightmost) digits identify a particular element appearing in a particular drawing and the one to two most significant (leftmost) digits refer to the figure in which that element first appears. For example, a particular system element may first appear as the 12th element in Fig. 10; that element would then be referred to by the reference number 1012. Similarly, an element first appearing as the 9th element in Fig. 3 would be referred to by the designation 309. Any such reference number is, as just described, assigned the first time a particular element appears in the following description and will then be used throughout the remainder of the description whenever that element is referred to. For example, element 309, which would first appear in Fig. 3, may also appear in Fig. 10 wherein it will continue to be identified by reference number 309.

Finally, and for clarity of presentation, the leftmost portion of any field, word or instruction will be referred to as the most significant or highest order byte or bit throughout the following descriptions. Similarly, the rightmost portion of any field, word or instruction will be referred to as the least significant or lowest order byte or bit.

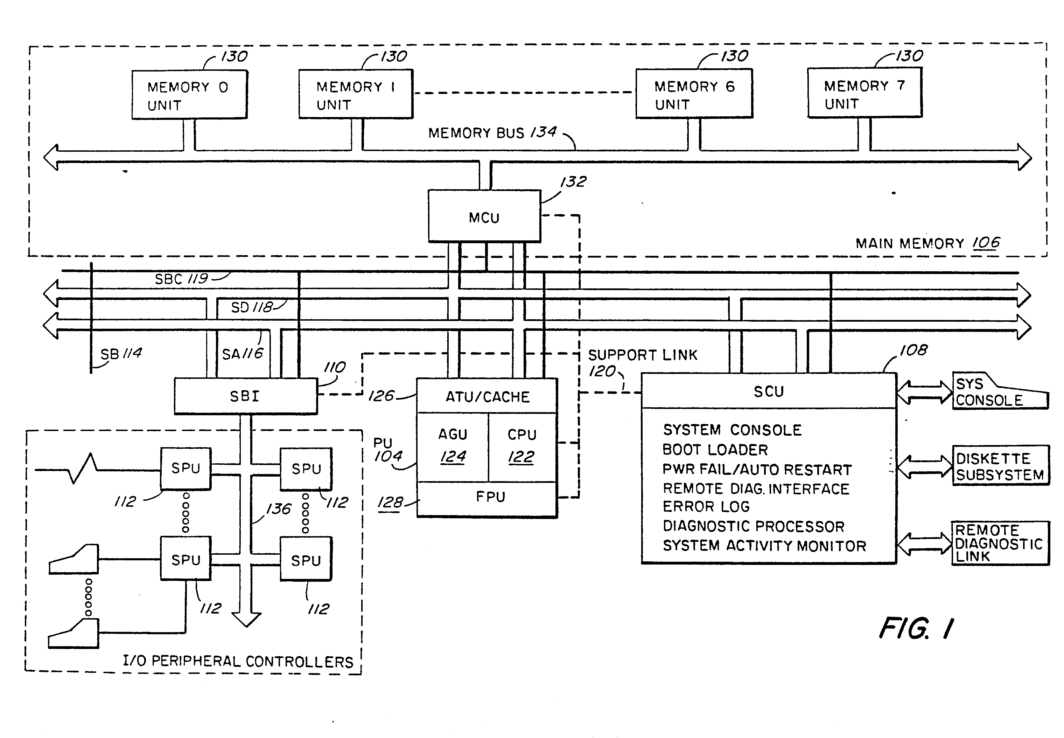

## A. Block Diagram Structure and Operation (Fig. 1)

Referring to Fig. 1, therein is presented a block diagram of a System 102 incorporating the present invention. As indicated therein, System 102 includes a Processor Unit (PU) 104, a Main Memory (MM) 106, a System Control Unit (SCU) 108, and a System Bus Interface (SBI) 110 with one or more Satellite Processing Units (SPUs) 112. These elements are bidirectionally connected to and interconnected by a System Bus (SB) 114 which is comprised of a bidirectional System Address (SA) Bus 116, a bidirectional Memory Control (MC) Bus 117, a bidirectional System Data (SD) Bus 118 and a System Bus Control (SBC) Link 119. SA Bus 114 and SD Bus 116 provide, respectively, for the transfer of addresses and data among the elements of System 102 while MC Bus 117 provides for the control of MM 106 operations. SBC Link 119 provides a mechanism for controlling access to SB 114 by the various users of SB 114, for example, PU 104, MM 106, SCU 108 and SBI 110. Certain elements of System 102, again, for example, PU 104, SCU 108, MM 106 and SBI 110, are further interconnected through Support Link (SL) Bus 120. As described further below, SL Bus 120 provides access and communication between SCU 108 and the internal operations of certain elements of System 102.

Referring first to PU 104, PU 104 includes a Central Processor Unit (CPU) 122 which executes operations on data under the control of processes, that is, under control of instructions received during execution of a program. As will be described in greater detail in the following, CPU 122 and the associated elements of PU 104 are microprogram controlled, with CPU 122 executing one macroinstruction each CPU cycle and one microinstruction at a time.

CPU 122 primarily performs binary and decimal integer arithmetic and logical operations and executes general instructions of the types described further below. CPU 122 also performs certain address generation operations in support of Address Generator Unit (AGU) 124, for example, instruction address relative calculations. CPU 122 further generates and maintains the system Program Control Word, also described further below. CPU 122 also generates microinstruction branch addresses and performs literal field constant operations using literal fields received from the microcode sequencer, also described in further detail in the following (?). As indicated in Fig. 1, CPU 122 is one of the System 102 elements connected with SL Bus 120.

Associated with CPU 122 is an Address Generator Unit (AGU) 124, which includes, as described in the following, a macroinstruction prefetch and queue mechanism. AGU 124 fetches instructions and generates, from the fields of the instructions, virtual addresses referring to operands to be operated upon by those instructions and dispatch addresses identifying microinstruction routines for executing those instructions. AGU 124 also generates, again from the fields of current instructions, virtual addresses of next instructions to be executed.

As will be described further in the following, AGU 124 and CPU 122 may thereby be respectively described as instruction operation and execution operation units. AGU 124 and CPU 122 operate separately and concurrently to provide overlap of instruction fetching, instruction decoding, operand fetching and instruction execution, thereby enhancing the internal performance of PU 104.

Associated with CPU 122 and AGU 124 is Address Translation Unit/Cache (ATU/C) 126, which operates as the data and address path between PU 104 and SB 114, with CPU 122 and AGU 124 being linked together and to ATU/C 126 by PU 104 internal data and address paths. As previously described, AGU 124 generates virtual addresses, that is, addresses of instructions and operands relative to the address space of an process; a process being an entity for executing programs for a user and being represented by an address space and a current state of execution of a program. ATU/C 126 operates with respect to AGU 124 to translate virtual addresses into corresponding physical addresses within System 102's address space, for example, for reads from and writes to MM 106. ATU/C 126 also operates as a cache mechanism with respect to CPU 122, that is, fetches and stores

-14-

operands and instructions in advance of CPU 122 operations. Again, ATU/C 126 operates concurrently with CPU 122 and AGU 124.

PU 104 may further include a Floating Point Unit (FPU) 128 for performing floating point arithmetic operations concurrently with other operations of PU 104, for example, CPU 122. FPU 128 is another System 102 element connected from SL Bus 120.

Referring to MM 106, as indicated in Fig. 1 MM 106 includes one or more Memory Units (MUs) 130 for storing data and instructions and a Memory Control Unit (MCU) 132 which controls the reading and writing of data and instructions from and to MUs 130. MCU is connected from SA Bus 116, MC Bus 117, SD Bus 118 and SBC Link 119 and is one of the System 102 elements connected from SL Bus 120.

SCU 108 primarily performs overall system control and support operations. As indicated in Fig. 1, SCU 108 may operate as a system console and may provide a diskette subsystem, for example, for the loading of microcode into PU 104. SCU 108 may also provide local diagnostic functions, and may provide a link for remote diagnostics. Other functions of SCU 108 may include power failure and automatic restart functions, error logging and system activity monitoring.

Referring finally to SBI 110 and SPUs 112. SPUs 112 are intelligent controllers/interfaces for peripheral devices, such as printers, communications links, terminals and disc drives. SPUs 112 are in turn connected with SBI 110 through Input/Output (IO) Bus 136. SBI 110 operates, in cooperation with SPUs 112, as a communications interface between IO Bus 136 and System Bus 114 to transfer information between the peripheral devices and the elements of System 102.

B. Fundamental Features and Principles of Operation (Figs. 2, 3, 4, and 5A, 5B and 5C)

As previously described, the following will describe certain fundamental features and operations of System 102, including data, instruction, address, program control word and interrupt structures and operations.

B.1 General System 102 Organization (Fig. 2)

As will be described in detail in the following, Processor Unit (PU) 104 includes facilities for addressing Main Memory (MM) 106, for fetching and storing information, for arithmetic and logical processing of data, for sequencing instructions in the desired order, and for initiating communication between MM 106 and external devices.

### B.1.a General Registers

PU 104 may, in association with the internal operations thereof,
address information in 16 32 bit general registers. The general
registers may be used as index registers in address arithmetic and
indexing, and as accumulators in fixed-point arithmetic and logical
operations. The general registers are identified by numbers 0-15
and, as described below, are specified by a 4-bit R field in an
instruction format. Some instructions provide for addressing
multiple general registers by having several R fields.

### B.1.b Control Registers

Sixteen additional 32-bit registers are provided for control
purposes and are not part of addressable storage, that is, may not
be addressed and used in the execution of instructions. These
control registers provide a means of maintaining and manipulating
control information residing outside of the Program Control Word
(PCW) which, as described below, is an 8 byte word residing in
System 102 and containing information pertaining to program and
instruction execution.

The uses and organization of the 16 control registers, CR0 to CR15,
will be well understood by one of ordinary skill in the art. In
System 102 the assignment of control registers is:

| | |
|---|---|
| CR0 | High Range |
| CRI | Save Area Back Chain |
| CR2 | System Stack Limit Word |
| CR3 | Low Range |
| CR4 | Modification Trap Address |
| CR5 | Previous-Instruction Trap Address |
| CR6-11 | Reserved |
| CR12-13 | Time-of-Day Clock |
| CR14-15 | Clock Comparator |

Considering the general structure of the control registers, control register 1 maintains a protected back chain of program calls and supervisor service entries (supervisor calls). Control register 2 is associated with the stack handling facility and is referred to as the system stack limit word. Control registers 0 and 3-5 are associated with the debugging aids, and control registers 12-15 are associated with the clock.


### B.1.c Memory References, Segments and Page Tables


System 102 maintains a number of local page tables (LPTs) of one-byte entries, each associated with a valid memory segment. All memory references involve the translation of virtual memory addresses through use of one of these tables.

Associated with the page tables is are one or more local page frame tables, which contain two bits of information per page frame of physical memory, that is, one reference bit and one change bit. Whenever some location in a page frame is referenced by a machine instruction, the corresponding reference bit of the corresponding local page frame table entry is set to indicate that reference. When this reference involves modification of the memory location, the corresponding change bit in the local page frame table entry is also set to indicate that change. These entries are tested and reset by an Operating System Assist instruction.

### B.1.d Arithmetic Operations By PU 104

The arithmetic and logical unit (ALU) of PU 104, described in detail below, can process binary integers of fixed length, decimal integers of variable length, and logical information of either fixed or variable length.

Arithmetic and logical operations performed by the PU 104 fall into five classes: fixed-point arithmetic, floating-point arithmetic, decimal arithmetic, decimal floating-point arithmetic, and logical operations. These classes differ in the data formats used, the registers involved, the operations provided, and the way the field length is stated.

### B.1.e Information Transfers Between PU 104 and MM 106
### and Addressing (Fig. 2)

The information transmitted between MM 106 and PU 104, and the information operated upon by PU 104, is organized as logical units of eight bits, that is, bytes, or multiples thereof. Referring to Fig. 2, therein is represented the information formats implemented in System 102. As shown therein, a word is defined as a field of 4 consecutive bytes whose address is a multiple of 4, a doubleword is defined as a field of two consecutive words whose address is a multiple of 8, and a halfword is defined as a field of two consecutive bytes whose address is a multiple of 2.

As will be described further in the following, the width of System Data (SD) Bus 118 is 64 bits, that is, 8 bytes or a double word, and all information transfers between MM 106 and PU 104 are in the form of double words.

In any instruction format or any fixed-length operand format, described further below, the bits or bytes making up the format are consecutively numbered from left to right starting with 0. Byte locations in memory are numbered consecutively, starting with 0 and each number is considered the address of the corresponding byte. A group of bytes in memory is addressed by the leftmost byte of the group and the number of bytes in the group is either implied or explicitly defined by the operation. As will be described further in below, System 102 uses 24-bit binary addresses which are expandable 31 bits. When only a part of the maximum addressable storage capacity of a System 102 is available in a given installation, the available storage is normally a contiguous range of physical addresses starting at address 0. An addressing exception is recognized when any part of an operand is located beyond the maximum available capacity of an installation. The addressing exception is recognized when the data is used and causes a program interruption.

### B.2 Instruction Formats (Fig. 3A to 3I)

As will be described below, System 102 implements a plurality of instruction formats, each of which will be described below. Each instruction, however, consists of two major parts: an operation code, which specifies the operation to be performed, and designations of the operands that participate in that operation.

### B.2.a Operation Codes

In each instruction format, the first, or most significant, byte of the most significant halfword of the instruction contains the operation code (opcode) field. Within the opcode field, the first two bits specify the length and format of the instruction, as illustrated in the following:

| Bit Positions | Instruction | Instruction |
|---|---|---|
| 0 and 1 | Length | Format |
| 00 | Halfword | RR |
| 01 | Two halfwords | RX |
| 10 | Two halfwords | RS, SI, S, RL, or RRL |
| 11 | Three or four halfwords | SS or SSI |

The second byte of the opcode field is used either as two 4-bit fields or as a single 8-bit field. This byte can contain the following information:

a 4-bit operand register specification (R1, R2, or R3);
a 4-bit index register specification (X2);
a 4-bit mask (M1);
a 4-bit operand length specification (L1 or L2);
a 8-bit operand length specification (L);
a 8-bit byte of immediate data (I2); or,
a 4-bit stack vector specification (S).

It should be noted that, in some instructions, a 4-bit field or the whole second byte of the first halfword may be ignored.

The second, third, and fourth halfwords of an instruction may vary in format depending, as described below, upon the particular instruction.

### B.2.b Operand References By Instructions

In System 102, an instruction may refer to up to three operands, depending on the instruction format. Operands so reference may further be grouped in three classes: operands located in registers, immediate operands, and operands in main memory (MM 106), and may be either explicitly or implicitly designated.

Register operands can be located in general, floating-point, or control registers, and are specified by identifying the register in a 4-bit field, called the R field, in the instruction. For some instructions an operand is located in an implicitly designated register.

Immediate operands are contained within the instruction, and the 8-bit field containing the immediate operand is called the I field.

The length of operands in MM 106 may be either implied, specified by a bit mask, or specified by a 4-bit or 8-bit length parameter, called the L field, in the instruction. The addresses of operands in MM 106 are specified by a format that uses the contents of a general or base register as part of the address. The address in the general register is called the B field and the additional displacement address (which may be 0) is the D field. The X field denotes an address in an index register, which is added to the base register address.

For purposes of describing the execution of instructions, operands are designated as first, second, and third operands. In general, two operands participate in an instruction execution, and the result

-22-

replaces the first operand. In certain instructions, however, the result replaces the second operand. Except for storing the final result, the contents of all registers and memory locations participating in the addressing or execution part of an operation remain unchanged.

### B.2.c Instruction Formats (Figs. 3A to 3I)

As will be described below, an instruction is one, two, three, or four halfwords in length and must be located in MM 106 on an integral halfword boundary.

Referring to Figs. 3A to 3I, nine instruction formats are illustrated therein. The nine basic instruction formats are denoted by the format codes RL, RR, RRL, RX, RS, SI, S, SS, and SSI, which express, in general terms, the operation to be performed:

```
RR     denotes a Register-to-register operation;
RL     denotes a Register-to-register (relative) operation;
RX     denotes a Register-and-indexed-storage operation;
RS     denotes a Register-and-storage operation;
RRL    denotes a Register-to-storage (relative) operation;
SI     denotes a Storage-and-immediate-operand operation;
S      denotes a Implied-operand-and-storage operation;
SS     denotes a Storage-to-storage operation; and,
SSI    denotes a Storage-and-immediate-operand operation.
```

-24-

### B.3 Program Control Word (Fig. 4)

As previously described, System 102 maintains, for each process, a
Program Control Word (PCW), eight bytes long, containing the
information required for proper program execution. The PCW includes
status and control information, interruption codes, and the
instruction address. In general, the PCW is used to control
instruction sequencing and to indicate the status of the system in
relation to the program currently being executed.

To execute a sequence of instructions, PU 104 takes the address of
an instruction from the PCW, executes that instruction and
increments the PCW's instruction address by the length of the
instruction. PU 104 then takes the new instruction address from the
PCW and the process continues until an interruption or a HALT I/O
command is received.

The active or controlling PCW is called the current PCW. Through
storage of the current PCW, the status of PU 104 can be preserved
for subsequent inspection. Through loading of a new PCW or part of a
PCW, the state of PU 104 can be changed.

The PCW is made up of a 1-byte interruption code, a 3-byte
instruction address, a 2-byte status field, and a 1-byte program
mask field, with one byte reserved for other uses.

Referring to Fig. 4, therein is illustrated the organization of a
System 102 PCW. The following presents a more detailed explanation
of the function of each bit in the PCW, wherein:

| PCW Bits | Mnemonic | Function |
| --- | --- | --- |
| 0-7 | | Interruption code |
| 8-31 | | Current instruction address |
| Status Field (system mask) | | |
| 32 | W | Wait state<br>0 = Operating state<br>1 = Wait state |
| 33 | C | Control mode<br>0 = Normal operating mode<br>1 = Control mode |
| 34 | P | Memory protection violation and privileged instruction trap<br>0 = Do not trap on memory protection violation or privileged instruction<br>1 = Trap on memory protection violation or privileged instruction |
| 37 | I | I/O interruption mask<br>0 = I/O interruptions disabled<br>1 = I/O interruptions enabled |
| 38 | T | Clock interruption mask<br>0 = Clock interruptions disabled<br>1 = Clock interruptions enabled |
| 39 | M | Machine check interruption mask<br>0 = Machine check interruptions disabled<br>1 = Machine check interruptions enabled |
| Status Field | | |
| 40 | B | PCW single address compare trap<br>0 = No PCW single address compare trap in effect<br>1 = Trap on PCW single address compare equal |
| 41 | D | Single byte modification trap<br>0 = No single byte modification trap in effect<br>1 = Trap on unequal compare with byte at specified byte |
| 42 | E | PCW range trap |

-26-

|  |  |  | 0 = No PCW range trap in effect<br>1 = Trap on unequal compare with<br>byte at specified PCW range |
|---|---|---|---|
| 43 | S |  | Single step trap<br>0 = No step exception<br>1 = Trap after execution of next<br>instruction |
| 44 | EM |  | Extended modification trap |
| 45 | BT |  | Branch-Taken trap |
| 46-47 |  |  | Reserved |
| 48-49 |  | CC | Condition code |

**Program Mask Field**

|  |  |  |
|---|---|---|
| 50 | FPO | Fixed-Point overflow mask<br>0 = Do not interrupt on overflow<br>1 = Overflow will cause<br>interruption |
| 51 | DO | Decimal overflow mask<br>0 = Do not interrupt on overflow<br>1 = Overflow will cause<br>interruption |
| 52 | EU | Exponent underflow mask<br>(floating-point instructions)<br>0 = Do not interrupt on underflow<br>1 = Underflow will cause<br>interruption |
| 53 | SG | Significance mask (floating-<br>point instructions)<br>0= Do not interrupt on overflow<br>1= Overflow will cause<br>interruption |
| 54-55 |  | Reserved |

**Reserved Byte**

|  |  |
|---|---|
| 56-63 | Reserved |

It should be noted that the PCW condition code field (BITS 48-49), the function of which is described in further detail in the following, may be set and tested by many of the instructions, and may be changed by certain instructions.

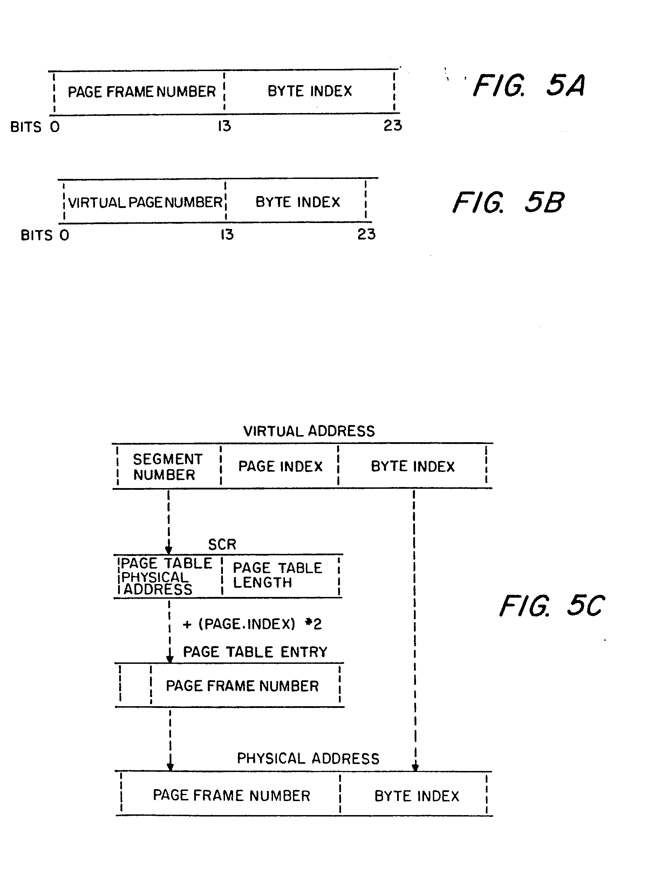

## B.4 Addressing (Figs. 5A, 5B and 5C)

As previously described, operands can be grouped in three classes: explicitly addressed operands in MM 106, immediate operands placed as part of the instruction stream in MM 106, and operands located in registers. These operands may be addressed by means of base-displacement, relative, or direct address generation, depending upon the instruction referring to an operand, and each of these addressing modes will be described below in the order given.

## B.4.a Base-Displacement Address Generation

To permit the ready relocation of program segments and to provide for the flexible specification of input, output, and working areas, all instructions referring to MM 106 may employ a full 24 or 31 bit address, as previously described and as will be described more fully in following descriptions of System 102.

Addresses used to refer to MM 106 are generated from the following three binary numbers:

Base Address (B) is a 24-bit number contained in a general register specified by the program in the B field of the instruction. The B field is included in every address specification. The base address can be used as a means of static relocation of programs and data. In array calculations it can specify the location of an array,

-28-

and in record processing it can identify the record. The base address provides for addressing all of main memory. The base address may also be used for indexing purposes.

Index (X) is a 24-bit number contained in a general register specified by the program in the X field of the instruction. It is included only in the address specified in the RX instruction format. The RX format instructions permit double indexing, that is, can be used to provide the address of an element within an array.

Displacement (D) or offset is a 12-bit number contained in the instruction format. It is included in every address computation. The displacement provides for relative addressing of up to 4095 bytes beyond the element or base address. In array calculations the displacement can be used to specify one of many items associated with an element. In processing records, the displacement can be used to identify items within a record.

In forming a base-displacement address, the base address and index are treated as unsigned 24-bit binary integers. The displacement is similarly treated as an unsigned 12-bit binary integer. The three integers are added as 24-bit binary numbers, ignoring overflow. Since every address includes a base, the sum is always 24 bits long.

A program may show a value of zero in the base address, index, or displacement field. A zero indicates the absence of the corresponding address component. A base or index of zero implies that a value of zero is to be used in forming the address, and does not refer to the contents of general register 0. Thus, the use of register 0 as a base register necessarily makes a program unrelocatable. A displacement of zero has no special significance. Initialization, modification, and testing of base addresses and indexes can be carried out by fixed-point instructions, or by certain branching instructions.

### B.4.b Relative Address Generation

For relative addressing instruction formats (RL and RRL), a base register is unnecessary. The current instruction address is an implied base address, and a relative offset is added to it to form the effective address. Use of this format may be limited to certain branch instructions.

A relative address used to refer to MM 106 is generated from the following three binary numbers:

Current instruction address is the implied base address. So if, for example, both X and L values are zero, then the instruction branches to itself.

Index (X), if specified in the instruction, is a 24-bit number contained in a general register specified by the program in the X field of the instruction.

-30-

Relative Ooffset (L) is extended from the number of bits in the instruction to a 24-bit number.

In forming a relative address, these three numbers are added as unsigned 24-bit binary integers, ignoring overflow. Otherwise, the rules for relative address generation are the same as the rules for base-displacement address generation.

### B.4.c Direct Address Generation

Addresses 0-4095 can be generated without a base address or index. This property is used, for example, when the PCW and general register contents must be preserved and restored during program switching. These addresses further include all reserved addresses used by System 102 for fixed purposes, such as old and new PCWs.

### B.4.d Address Translation (Figs. 5A, 5B and 5C)

Address translation is the process of converting virtual addresses referring to locations within a user's virtual address space, that is, the address space within the user's program or process, into physical addresses referring to MM 106 locations.

MM 106 for System 102 is comprised of byte-addressable random access memory (RAM) logically organized into page frames and spanned by a 24-bit address which, as described further below, is expandable to 31 bits to provide additional addressing space.

Referring to Fig. 5A, MM 106 physical addresses are each comprised of a 13-bit page frame number field to identify particular page frames within MM 106 address space and an 11-bit byte index field to identify locations within the page. In the present implementation, each page frame contains of 2K bytes of information, is aligned on a 2K-byte boundary and contains exactly one page of information. As will be described further below, MM 106 supports byte-aligned write operations of 1, 2, 4, or 8 bytes and doubleword-aligned read operations of 8 bytes.

The virtual memory space, located for example in disk storage, is divided logically into pages and segments. As shown in Fig. 5B, virtual memory addresses are each comprised of a 13-bit virtual page index field identifying virtual pages within the virtual address space and an 11-bit byte index identifying locations within virtual pages. Virtual pages are also 2K bytes in size and begin on 2K-byte boundaries. Physically, each page may, for example, occupy one sector of a disk platter. Segments, in turn, are blocks of pages beginning on 1M-byte boundaries. Pages of virtual memory may be copied as needed into available page frames of MM 106, as will be described further below.

-32-

System 102 may provide one or more concurrent users with a virtual address space for instructions and data, for example, in disc storage, that is larger than the amount of memory physically available in MM 106. Because instructions and data must be present in MM 106, however, while being processed, they are copied from virtual memory into MM 106 as required. The process of copying information from virtual memory into MM 106 is referred to as paging and is accomplished in units of 2K bytes, or one page. In addition, before a program instruction can be executed a conversion referred to as address translation must be performed on the virtual addresses specified therein to translate the virtual addresses into physical addresses.

Part of the address translation mechanism is comprised of one or more page tables, there being a page table for each user's task, or process, and each page table containing the mapping of the corresponding task's virtual address space to MM 106 page frames. Each entry of a page table corresponds to a virtual page address and contains information pertaining to that virtual page address, for example, whether the page exists in main memory and whether read and write protection are in effect for the page.

A second part of the address translation mechanism is comprised of segment control registers (SCR)s, that is, PU 104 registers which are loaded with the address of a task's MM 106 page table, and other relevant information, for a given segment of virtual memory when the corresponding task is to be executed.

Referring to Fig. 5C, the process of translating a virtual address into a physical address is illustrated therein. The first step of address translation is to determine whether the MM 106 page table contains a page frame number for the virtual address. If so, the PU 104 concatenates this 13-bit number with the 11-bit virtual byte index (offset) to form a 24-bit physical address, as illustrated in Figure 5A. PU 104 then uses this physical address to access the data in MM 106. If the page table does not contain a page frame number for the virtual address, PU 104 initiates the copying of the virtual page from virtual memory into an available page frame and records the number of the selected page frame in the task's page table. The task may then resume execution.

### B.5 Interrupt Mechanism

Finally, System 102 includes an interrupt mechanism which permits PU 104 to change state of operation as a result of conditions external to the system, in input/output (I/O) devices, or in PU 104  Five classes of interruption conditions are recognized in the present implementation of System 102:  I/O, clock, program, supervisor call, and machine check.

-34-

Each class of interruption except supervisor call has two related PCWs called "old" and "new" in permanently assigned MM 106 locations. An interruption involves storing information, identifying the cause of the interruption, storing the current PCW in its old position, and making the PCW at the new position the current PCW. The supervisor call class of interruption has only a new PCW in a permanently assigned MM 106 location. The supervisor call old PCW, however, is stored on the top of the system stack.

Old PCWs hold necessary PU 104 status information at the time of interruption. If, at the conclusion of the program invoked by the interruption, an instruction is executed making the old PCW the current PCW, PU 104 is restored to the state prior to the interruption, and the interrupted program continues.

An interruption is permitted between units of instructions, that is, after the performance of one instruction and before the start of a subsequent instruction and, for interruptible instructions, during instruction performance. The manner in which the instruction preceding an interruption is finished may be influenced by the cause of the interruption. An instruction may be completed, terminated, aborted, suppressed, or resumed.

Considering briefly the various classes of interruption:

An I/O interruption provides a means by which PU 104 responds to signals from I/O devices;

A clock interruption provides a means by which PU 104 responds to timing conditions set within the system;

A program interruption results from improper use of instructions and data;

A supervisor call interruption occurs from the issuance of a supervisor call instruction; and,

A machine check interruption results from the occurrence of a machine malfunction.


Having described certain of the basic features and principles of operation of System 102, the operation of the elements of System 102 will be described next below.


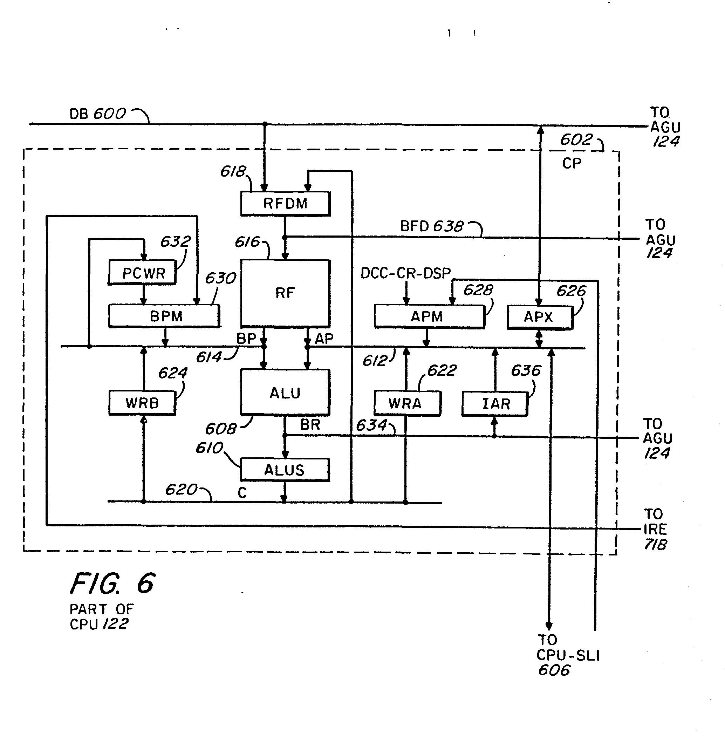

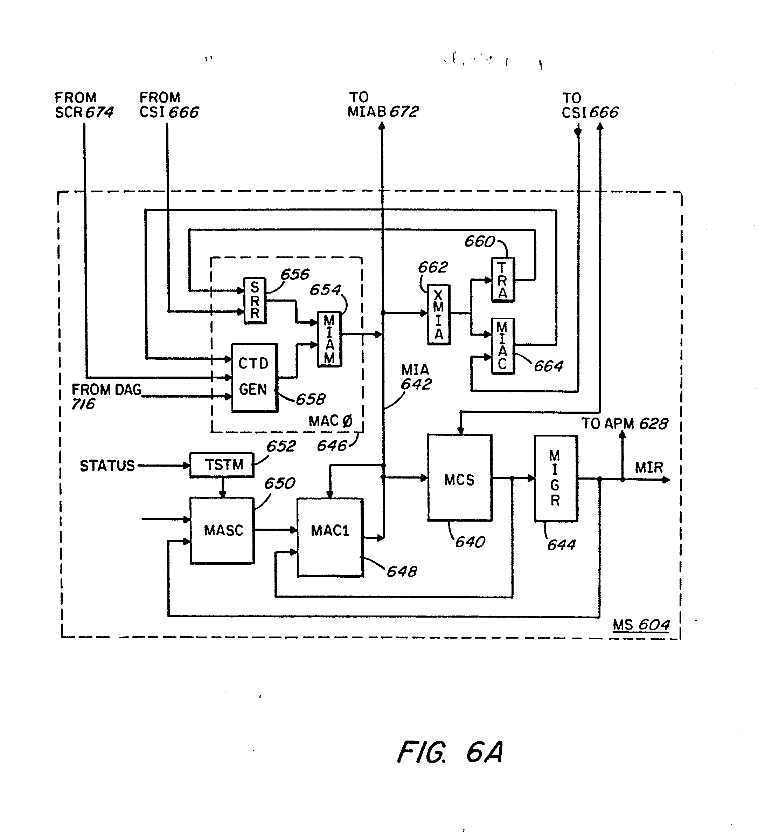

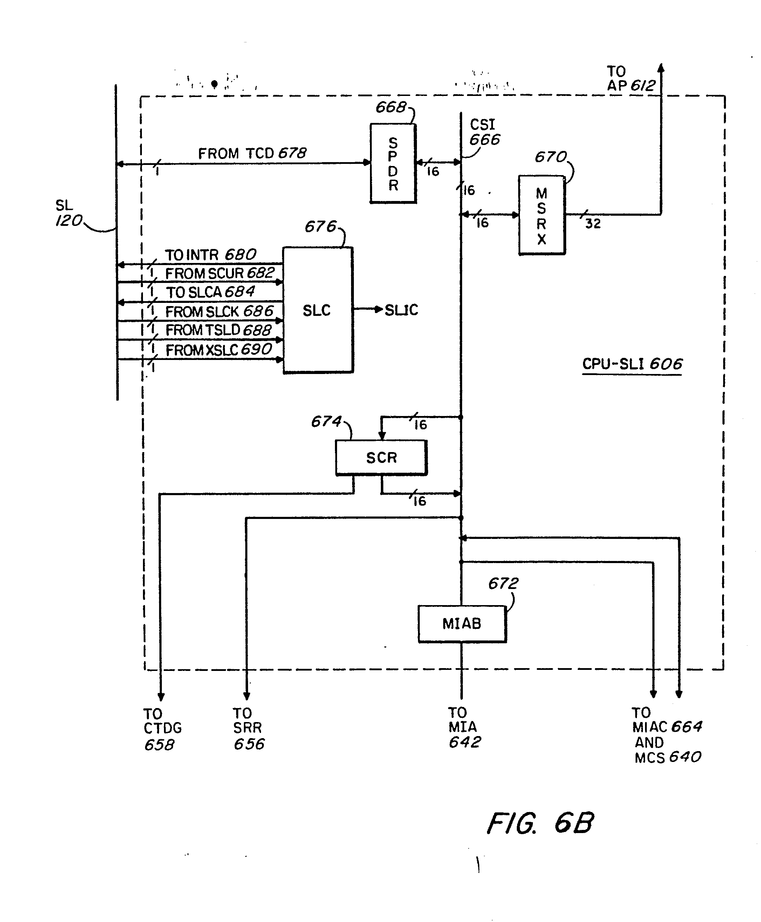

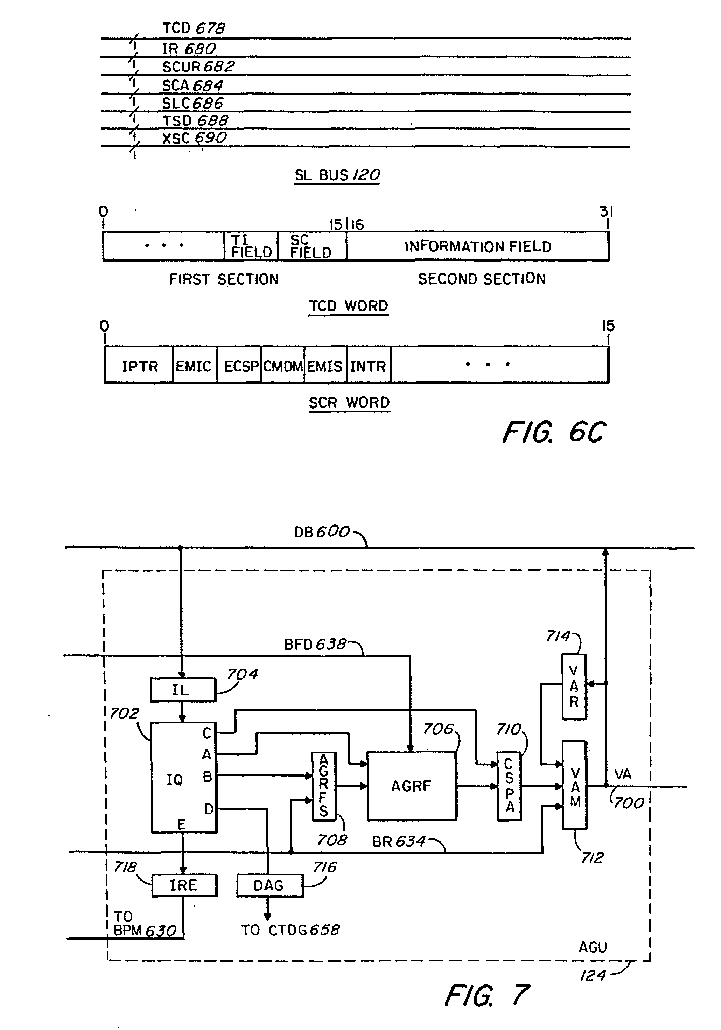

C. Detailed Description of PU 104 (Figs. 6, 7, 7A and 8)


Referring to Figs. 6, 6A, 7 and 8, therein are presented more detailed block diagrams of, respectively, CPU 122, AGU 124 and ATU/C 126, which will be described below in that order. Figs. 6, 7 and 8 may be placed side by side, in that order from left to right, and Fig. 6A placed below Fig. 6 to comprise an overall block diagram of those portions of PU 104. It is recommended that Figs. 6, 6A, 7 and 8 be so arranged for the purposes of the following descriptions.

-36-

As previously described, AGU 124 and CPU 122 operate separately and concurrently, together with ATU/C 126, to provide overlap of instruction fetching, instruction decoding, operand fetching and instruction execution. The following will describe CPU 122, AGU 124 and ATU/C 126, in that order, and will describe the overall and cooperative operations of these elements. Certain features of some of these elements will, for clarity of presentation, be described after the operation of all three of these elements has been described.

## C.1 CPU 122 (Figs. 6 and 6A)

Referring first to Fig. 6 and 6A, as previously described CPU 122 executes operations on data under the control of processes, that is, under control of instructions received during execution of a program. As will be described in greater detail in the following, CPU 122 and the associated elements of PU 104 are microprogram controlled, with CPU 122 executing one macroinstruction each CPU cycle and one microinstruction at a time.

CPU 122 performs binary and decimal integer arithmetic and logical operations and executes general instructions of the types described previously. CPU 122 also performs certain address generation operations in support of AGU 124, for example, branch instruction

-37-

address calculations. CPU 122 further generates and maintains the system Program Control Word, also described previously. CPU 122 also generates microinstruction branch addresses and performs literal field constant operations using literal fields received from the microcode sequencer, also described in further detail in the following. As also previously described, CPU 122 is one of the System 102 elements connected with SL Bus 120.

As indicated in Figs. 6 and 6A, CPU 122 includes a Central Processor (CP) 602, a Micro-Code Sequencer (MS) 604 and a CPU Support Link Bus Interface (CPU-SLI) 606. MS 604 and CPU-SLI 606, shown in Fig. 6A, will be described further below, after CPU 122, AGU 124 and ATU/C 126 have been described.

Referring to CP 602, CP 602 includes a 32 bit Arithmetic and Logic Unit (ALU) 608 and associated ALU Shifter (ALUS) 610 for performing arithmetic and logic operations, for example, on data and addresses.

Data inputs to ALU 608 are provided through a 32 bit ALU A Input Port and a 32 bit ALU B Input Port connected from, respectively, 32 bit A Port (AP) Bus 612 and 32 bit B Port (BP) Bus 614. As shown in Fig. 6, AP Bus 612 and BP Bus 614 are provided with a plurality of data sources and outputs, which will be described below. One such

-38-

data source to AP Bus 612 and BP Bus 614 is, respectively, the 32 bit A and B outputs of Register File (RF) 616, which is, in the present embodiment, a 32 bit wide by 256 word register file.

A 32 bit data input to RF 616 is provided from Register File Data Multiplexer (RFDM) 618, which has a first 32 bit input from 32 bit (1 word) Data B (DB) Bus 600 and a second 32 bit input from 32 bit C Bus 620. As will be described further in the following descriptions of AGU 124 and ATU/C 126, DB Bus 600 is PU 104's primary internal data path and links together CPU 122, AGU 124 and ATU/C 126.

C Bus 620 is, as shown in Fig. 6, connected from the 32 bit output of ALUS 610. The path from C Bus 620 to RFDM 618 is provided to allow the results of ALU 608 and ALUS 610 operations to be returned to the data input of RF 616, for example, for reiterative operations.

Also connected from C Bus 620 are a 32 bit Working Register A (WRA) 622 and a 32 bit Working Register B (WRB) 624, the outputs of WRA 622 and SRB 624 being connected respectively to AP Bus 612 and BP Bus 614. These data paths allow the results of ALU 608 and ALUS 610 operations to be returned to, respectively, AP Bus 612 and BP Bus 614, for example, to the A and B Port inputs of ALU 608 or to the Program Control Word Register, described below.

-39-

A 32 bit bidirectional data path is provided between AP Bus 612 and DB Bus 600 through bidirectional A Port Transceiver (APX), thereby allowing data to be transferred between DB Bus 600 and AP Bus 612. This path may be used, for example, to transfer the results of ALU 608/ALUS 610 operations to DB Bus 600 or to transfer data from DB Bus 600 to the A Input Port of ALU 608.

AP Bus 612 and BP Bus 614 are provided with further data sources from A Port Multiplexer (APM) 628 and B Port Multiplexer (BPM) 630 which may selectively transfer information from a plurality of sources onto, respectively, AP Bus 612 and BP Bus 614. As will be described next below, the data sources associated with BP Bus 612 are primarily concerned with arithmetic operations and, as in part described above, with data transfers between CP 602 and DB Bus 600, that is, with operations on data. The data sources associated with AP Bus 614 are primarily concerned with the system Program Control Word and instruction address calculations, that is, with control of system operation.

Referring first to APM 628, a first input of APM 628 is comprised of decimal correction constants DCC used in performing decimal arithmetic operations in the binary ALU 608/ALUS 610, as is well known to those of ordinary skill in the art. Other connections to this first input may include inputs CR from the control registers previously described and displacement fields DSP used in address

calculations. A second input of APM 628 is, as also known in the art, comprised of general purpose microinstruction literal field bits provided from MS 604. This path may be used, for example, to provide literal constants, in generating microinstruction branch addresses or for manipulating the machine's internal registers, for example, the Program Control Word Register described below. It should be noted that, as shown in Figs. 6 and 6A, AP Bus 612 is also provided with a bidirectional connection from CPU-SLI 606, which will be described in the following description of CPU-SLI 606.

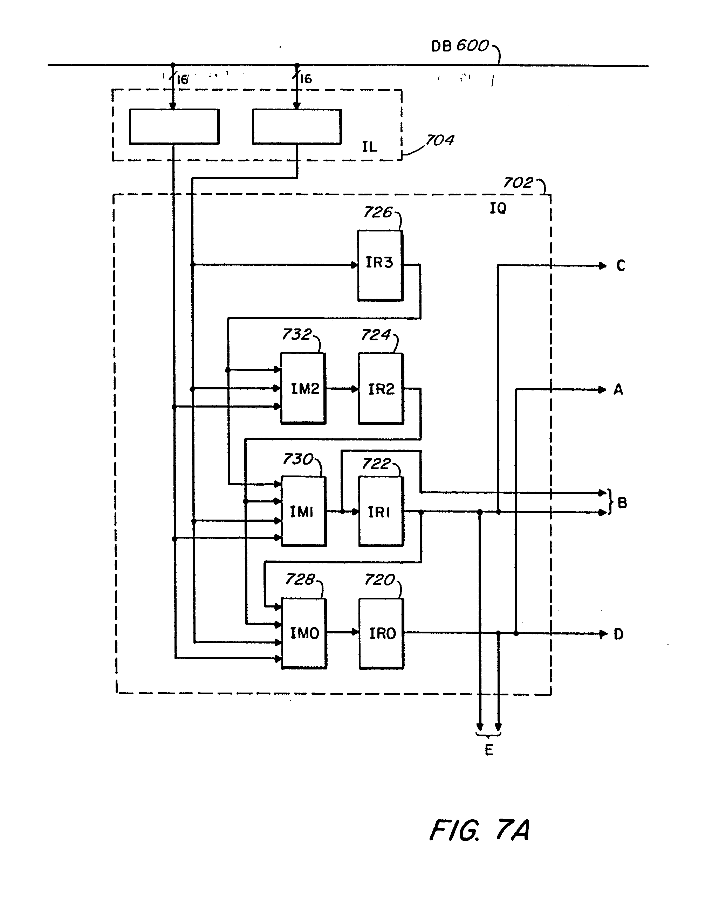

Referring to BPM 630, as indicated in Figs. 6 and 7 a first input to BPM 630 is a 32 bit input from AGU 124 representing the instruction currently being executed. A second input is comprised of combinations of 32 of the 64 bits of the current Program Control Word (PCW) which resides in the 64 bit PCW Register (PCWR) 632, these 32 bits comprising those portions of the PCW representing the instruction currently being executed. As further shown in Fig. 6, PCWR 632 is provided with a 32 bit input from BP Bus 614; this PCWR 632 input comprises that portion of the PCW representing the instruction currently being executed and, in general, corresponds to the 32 bits provided from PCWR 632 to BPM 630. The CP 602 paths comprising the current instruction inputs from AGU 124 and PCWR 632 and the current instruction output to PCWR 632 thereby provide a means by which CP 602 may manipulate the PCW and current instruction. As previously described, these PCW and instruction

-41-

manipulation operations may include address generation operations in support of AGU 124, for example, instruction address relative calculations and branch address operations.

Associated with the above described BP Bus 614 connections and operations is, as shown in Figs. 6 and 7, a 32 bit output provided from the output of ALU 608 to an input of AGU 124 through Buffered Register (BR) Bus 634. This path is the means by which CP 602 may provide, for example, branch addresses calculated by CP 602 directly to AGU 124.

As shown in Fig. 6, an Instruction Address Register (IAR) 636 is connected from BR Bus 634 and to AP Bus 612. IAR 636 is comprised of two address registers connected in sequence. The first register, having an input connected from BR Bus 636, is a Next Instruction Address Register and stores the address of the instruction to be next executed. The Next Instruction Address Register operates as an increment by 2 or 4 counter to generate next instruction addresses, the incrementing being controlled by microcode routines in response to information from AGU 124 regarding the size, that is, 32, 48 or 64 bits, of the instruction currently being executed.

The second IAR 636 register, having an input connected from the output of the Next Instruction Address Register and an output connected to AP Bus 612, is an Instruction Address Executing

-42-

Register storing the address of the instruction currently being executed. As described further below, these registers, and in particular the Next Instruction Address Register, comprise a part of the PCW and are used, for example, in instruction branching operations. As will be described in a following description of ATU/C 126 and the cooperative operations of CPU 122, AGU 124 and ATU/C 126, instruction addresses are generated, during normal, sequential execution of instructions, by ATU/C 126.

Finally, and as shown in Figs. 6 and 7, a file data output is provided from CP 602 to AGU 124 through Buffered File Data (BFD) Bus 638, which is connected from the output of RFDM 618. This path allows data to be written into the AGU 124 Register File, described further below, in the same manner as into RF 616. Examples of such data include addressing data from DB Bus 600 and the results of CP 602 address calculations, such as general register and base addresses, as previously described.

Having described CPU 122, AGU 124 will be described next below.

### C.2 AGU 124 (Figs. 7 and 7A)

As previously described, the function of AGU 124 is to fetch instructions and to generate, from the fields of the instructions, virtual addresses referring to operands to be operated upon by those

-43-

instructions and dispatch addresses identifying microinstruction routines for executing those instructions.

As shown in Fig. 7, major elements of AGU 124 include an Instruction Queue (IQ) 702 with Instruction Latches (IL) 704 for fetching and storing instructions in advance of the execution of those instructions by CPU 122. As will be described further below, IQ 702 includes the logic necessary to extract from the instructions the operation code (opcode) fields used for dispatch addressing of microinstructions routines and the operand related fields containing information identifying the operands to be operated upon by the microinstruction routines.

With regard to the addressing of operands, it should be noted that, as previously described, the instruction fields containing information pertaining to operands may specify, for example, a register containing an operand or registers containing address information which may be used to calculate the address of the operand. In a typical operand addressing operation, the address of an operand may be identified relative to a specified base address. In this case, the operand related fields of the instruction may contain a first field identifying a register containing the base address and a second field containing an offset from that base address, that is, the location of the operand relative to the base address. The actual address of the operand is then determined by

-44-

reading the base address from the identified register and adding the offset to the base address.

As described in detail below, AGU 124 therefore includes an Address Generator Register File (AGRF) 706 for storing information used to calculate addresses. AGRF 706 may contain, for example, the registers assigned to store base addresses. Associated with AGRF 706 is AGRF Select Logic (AGRFS) 708, which receives operand addressing fields from IQ 702 and provides corresponding address outputs to AGRF 706, and Carry Sum Propagate Adder (CSPA) 710, which is used to perform the arithmetic operations in calculating operand addresses.

Finally, AGU 124 includes Virtual Address Multiplexer (VAM) 712 and Virtual Address Registers (VAR) 714. As will be described further below, VAM 712 is the source of operand and instruction addresses to ATU/C 126 and, for this purpose is connected from the operand address outputs of AGU 124, that is, the output of CSPA 710, and from the next instruction address output of CPU 122, that is, the next instruction address output provided from IAR 636 and through BR Bus 634. As will be described below, VAR 714 is a buffer register used for certain addressing operations, such as memory to memory transfers.

## C.2.a AGRF 706 and AGU 124 Output Logic (Fig. 7)

As described above, AGRF 706 is a register file for storing information for generating, from the fields of currently executing instructions, virtual addresses referring to operands to be operated upon by those instructions. Examples of such information include base addresses, index addresses, displacements and operand register addresses, as previously described in the System 102 addressing structure.

In the present embodiment, AGRF 706 is a 32 bit wide by 16 word register file which is addressed by inputs from AGRFS 708 and which receives data inputs from CP 602 through BFD Bus 638. It should be noted, in this regard, that in as much as CP 602 must have access to certain of the information stored in AGRF 706 in generating, for example, instruction branch addresses, a copy of the contents of AGRF 706 are stored in RF 608 for such purposes.

As described above, the 32 bit virtual address outputs of AGRF 706 are provided as one input to CSPA 710, while a second output is provided from IQ 702. As described further below, CSPA 710 input provided from IQ 702 is used in index relative addressing, that is, in generating an address relative to an element or base address provided as an output of AGRF 706.

-46-

The output of CSPA 710 is, in turn, provided as one input to VAM 712. A second input is provided to VAM 712 from BR Bus 634 which, as previously described, is connected from the output of ALU 608 in CP 602. As previously described, this BR Bus 634 input to VAM 712 allows CP 602 to directly generate and provide, for example, virtual instruction branch addresses.

A third input to VAM 712 is provided from VAR 714 which, in the present embodiment, is comprised to two parallel 32 bit registers having inputs connected from the virtual address output of VAM 712. VAR 714 are particularly used in memory to memory operations, that is, operations wherein one or more read and write operations are performed in a continuous sequence to transfer information from one address location or locations and into a second address location or locations.

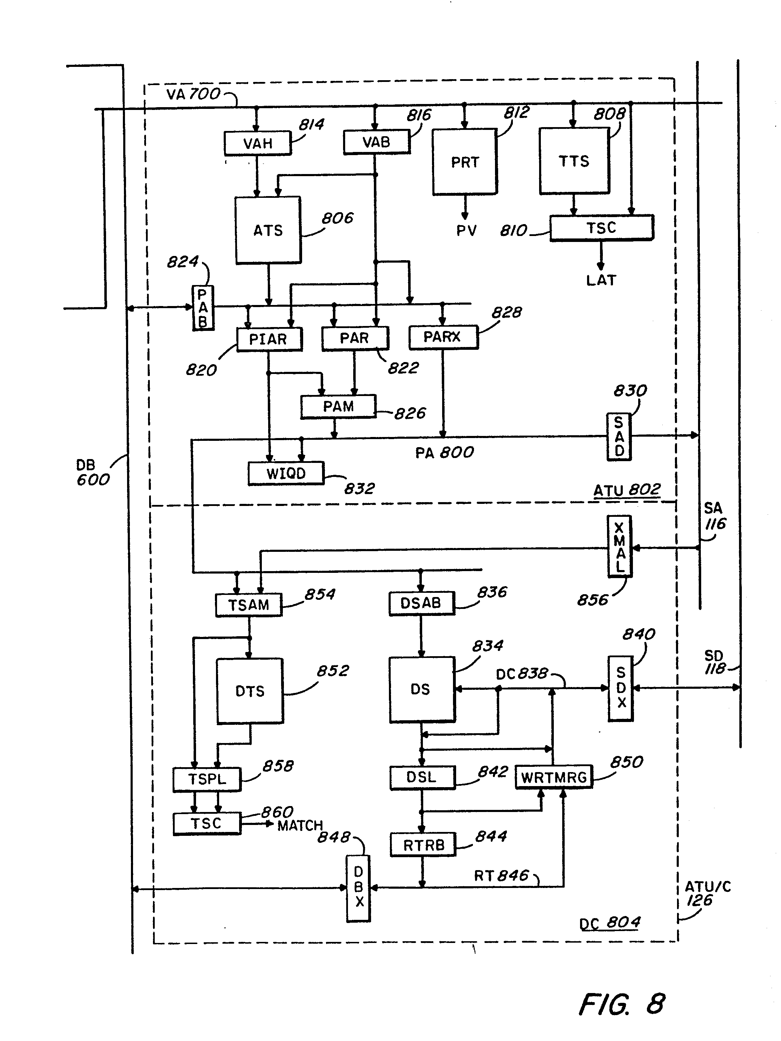

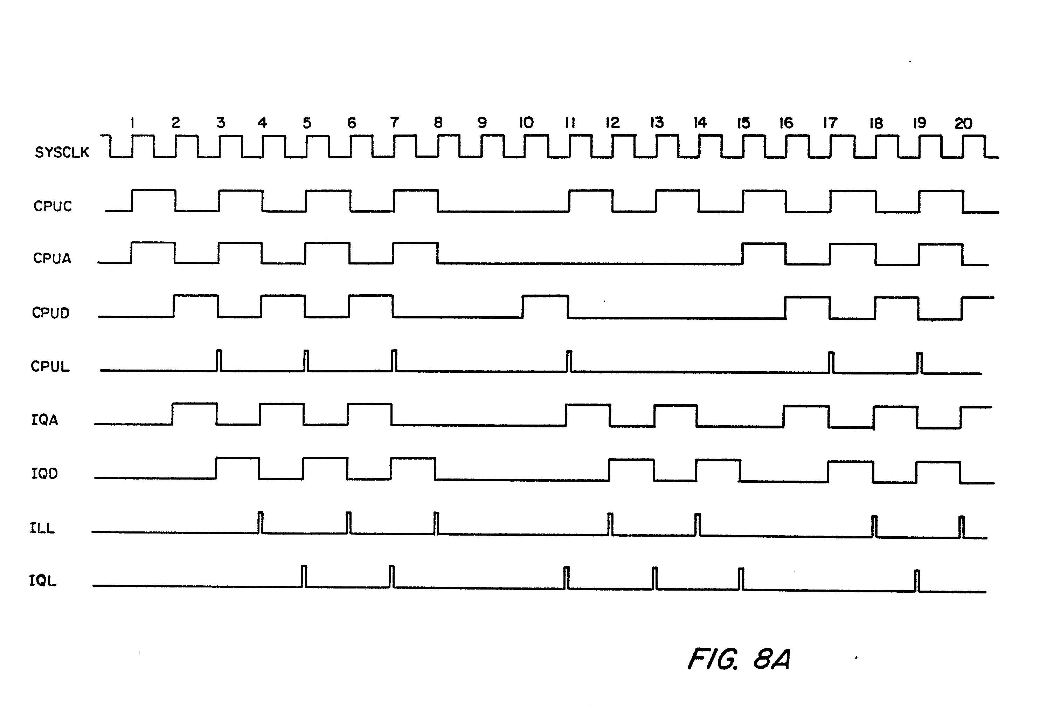

As shown in Figs. 7 and 8, the output of VAM 712 is provided to ATU/C 126 through Virtual Address (VA) Bus 700; as previously described, the virtual addresses provided by AGU 124 are translated by ATU/C 126 into physical addresses. The output of VAM 712 is also connected, as described above, to the inputs of VAR 714, and to DB Bus 600.

-47-

### C.2.b IQ 702 and IL 704 (Figs. 7 and 7A)

As previously described, IQ 702 fetches instructions from ATU/C 126's cache, described further below, in anticipation of execution of those instructions and decodes instruction fields to generate virtual addresses and to generate dispatch addresses identifying microinstruction routines for executing those instructions. As previously described, AGU 124 and IQ 702 operate independently and in cooperation with CPU 122 and ATU/C 126. AGU 124 and IQ 702 are thereby provided with an independent control mechanism, specifically a finite state machine. This control mechanism is not represented in Fig. 7 for clarity of presentation as the necessary structure and operation of this control mechanism is well understood by those of ordinary skill in the art, in particular after the following description of the structure and operation of IQ 702.

Referring first to the System 102 instructions fetched and decoded by IQ 702, as previously described instructions may in the present embodiment be 32 bits (4 bytes), 48 bits (6 bytes), or 64 bits (8 bytes) in length. The first byte of each instruction is comprised of an operation code (opcode) field defining an operation to be performed. The remaining instruction bytes contain operand related fields, each of one or more bytes and containing information pertaining to the operands to be operated upon by the instruction. As described below, this information primarily pertains to the addressing of the operands.

Considering first the operand related fields of instructions, examples of such fields include, as previously described, R1, R2 and R3 fields specifying registers containing operands and I fields containing immediate operands. B1 and B2 fields specify registers containing base addresses while D fields specify registers containing displacement fields and X2 fields specify registers containing addressing index fields. As described above, the registers referred to by these fields may reside in AGRF 706 and the instruction fields may be used, through AGRFS 708, to address the AGRFS 708 registers corresponding to these instruction fields. Other operand related fields may include L fields defining operand lengths, S fields containing stack vectors and M fields containing masks; again, certain of these fields may refer to and correspond to AGRFS 708 registers.

Of the above fields, the subset including R2, R3, X2, B1 and B2, and D1 and D2 fields are used directly in generating virtual addresses. Of this addressing subset, the R2, R3, X2, B1 and B2 fields specify registers whose virtual addresses reside in AGRF 706 and, as such, these fields are provided as address inputs to AGRF 706. The R2, R3 and X2 fields are provided directly to an AGRF 706 address input from IQ 702 Output A while the B1 and B2 fields are provided to an AGRF address input from IQ 702 Output B and through AGRFS 708. As shown in Fig. 7, AGRFS 708 is provided with a further address input from BR Bus 634, which is connected from the output of ALU 608; this path is used for PCW relative addressing, that is, instruction branch addressing.

Finally, the D1 and D2 fields, as previously described, contain displacements, or offsets, for addressing relative to an element or base address. As such, the D1 and D2 fields are added to the virtual addresses provided from AGRF 706 in response to an R or B field address input and are accordingly provided as an input to CSPA 710 from IQ 702 Output C.

Considering now the instruction opcode field, as previously described IQ 702 extracts the opcode fields from instructions and uses these fields, together with other information, in generating dispatch addresses identifying microcode routines to control operation of System 102.

The opcode fields are provided from IQ 702 Output D to an input of Dispatch Address Generator (DAG) 716. DAG 716 contains the logic necessary to generate dispatch addresses and provides, as previously described and as shown in Figs. 6 and 7, a Dispatch Address output to MS 604, described further below. In the simplest condition, DAG 716 may pass an opcode field directly through as a Dispatch Address output to MS 604, the opcode field being used directly in selecting the microcode routine for performing the operation indicated by the opcode field. In other conditions DAG 716 provides the Dispatch Addresses necessary for, for example, instruction complete and instruction ready conditions, power failure or system initialization operations, clock and debug pending conditions, page boundary conditions, command mode conditions, a write to IQ 702 condition, or a dispatch inhibit condition. DAG 716 also contains an address comparator to check the validity of addresses, for example, in instruction branch operations, and to provide corresponding Dispatch Addresses upon address invalidity. DAG 716 will not be described in further detail in as much as DAG 716 is conventional and well understood by those of ordinary skill in the art.

Finally, and as also previously described and shown in Figs. 6 and 7, AGU 124 provides to CPU 122 an output representing the instruction currently to be executed. This 32 bit output contains the opcode field and next contiguous 24 bits of operand related fields and is provided from IQ 702 Output E to an input of Instruction Register, Execute (IRE) 718. The output of IRE 718 is connected, in turn and as previously described and shown in Figs. 6 and 7, to an input of BPM 630.

-51-

Having described the external connections and operations of IQ 702 and IL 704, the detailed structure and operation of IQ 702 and IL 704 will be described next below.

Again referring to the System 102 instructions fetched and decoded by IQ 702, as previously described instructions may be 32 bits, 48 bits or 64 bits in length. That is, an instruction is an integer multiple of half words in length wherein a word has been previously defined as 32 bits and a half word as 16 bits. The first byte (8 bits) of each instruction is comprised of an operation code (opcode) field defining an operation to be performed. The remaining instruction bytes contain operand related fields, each of one or more bytes and containing information pertaining to the operands to be operated upon by the instruction.

Referring to Fig. 7A, therein is presented the detailed structure of IQ 702 and IL 704. IL 704 is shown as a 32 bit (1 Word) latch having a 32 bit input connected from DB Bus 600 and providing a 32 bit output to IQ 704. In the present embodiment, IL 704 is implemented as two parallel 16 bit (half word) latches, each having a 16 bit input connected from DB Bus 600 and providing a 16 bit output to IQ 702. One latch receives and provides the high order half word of a 32 bit word appearing on DB Bus 600 while the other receives and provides the low order half word.

IQ 702 is shown in Fig. 7A as including four 16 bit (half word) Instruction Registers (IRs), respectively designated as IR0 720, IR1 722, IR2 724 and IR3 726. The data input of IR3 726 is connected directly from the higher order half word of IL 704. The data inputs of IR2 724, IR1 722 and IR0 720 are provided through Input Multiplexers designated, respectively, as IM0 728, IM1 730 and IM2 732, whose inputs are in turn connected from IL 704 and the outputs of other of the Instruction Registers. As indicated in Fig. 7A, the inputs of IM2 732, and thus of IR2 724, are connected from the two 16 bit outputs of IL 704 and the 16 bit output of IR3 726. The inputs of IM1 730, and thus of IR1 722, are connected from the two 16 bit outputs of IL 704, the 16 bit output of IR3 726, and the 16 bit output of IR2 724.

IQ 702 thereby comprises a 64 bit register divided into four 16 bit, or half word, segments. The IQ 702 segments may be shifted forward, that is, in the direction from IR3 726 to IR0 720, as individual segments or as blocks of one or more segments and by multiples of one or more segments. IL 704 provides a further 32 bits, or two segments, of instruction storage. The 32 bits of IL 704 may be shifted forward into IQ 702, as a two segment block, by multiples of one or more segments.

The total capacity of the instruction queue comprising IQ 702 and IL 704 is thereby 96 bits, that is, 4 words or 8 half word segments.

-53-

With the possible exception of 64 bit SSI format instructions, the instruction queue may therefore always contain at least two instructions. In addition, the capability of the instruction queue to shift segments or blocks of segments forward by selectable integral multiples of segments allows the instructions contained therein to be shifted forward so that the first segment of the current instruction being decoded resides in IR0 720, the second in IR1 722, and so on. The instruction or instructions following the current instruction are shifted forward by the same amounts, so that there is a continuous stream of instructions flowing through IQ 702 to be decoded. In this regard, and as will be described in the following description of the cooperative operation of CPU 122, AGU 124 and ATU/C 126, IQ 702 will, through the instruction queue control mechanism, attempt to fetch a further 32 bits of instruction from the ATU/C 126 cache each time IR2 724 and IR3 726 become empty.

As just described, IQ 702 operates so that the first segment (bits 0-15) of the instruction currently being decoded resides in IR0 720, the second segment (bits 16-31) in IR1 722, the third segment (bits 32-47) in IR3 732, and so on. Considering first the instruction operand fields and the previously described IQ 702 Outputs A, B and C, as shown in Fig. 7A previously described IQ 702 Output A (R2, R3 and X2 fields) is connected from from output bits 12-15 of IM1 730; IQ 702 Output B (B1 and B2 fields) is connected from output bits 0-3 of IR1 722 and output bits 0-3 of IM1 730 and are combined into a

-54-

single 4 bit output by a multiplexer residing in AGRFS 708; and IQ 702 Output C (D1 and D2 fields) is connected from bits 4-15 of IR1 722. Considering the instruction opcode fields and IQ 702 Outputs D and E, as shown in Fig. 7A IQ 702 Output D (opcode field) is connected from output bits 0-7 of IR0 720 and 32 bit IQ 702 Output E instruction currently being executed) is connected from output bits 0-15 of IR0 720 and output bits 0-15 of IR1 722. A comparison of these IQ 702 outputs and the previously described fields of the various instruction formats will show that the previously described instruction fields may be selectively provided upon these previously described IQ 702 outputs.

Having described the structure and operation of AGU 124, the structure and operation of ATU/C 126 will described next below.

#### C.3 ATU/C 126 (Fig. 8)

As previously described, Address Translation Unit/Cache (ATU/C) 126 operates as the data and address path between PU 104 and other elements of System 102. In particular, CPU 122 and AGU 124 are linked together and to ATU/C 126 through DB Bus 600 and VA Bus 700 and ATU/C 126 forms the link between these elements and SA Bus 116 and SD Bus 118. In providing this link, ATU/C 126 translates virtual addresses provided by AGU 124 into corresponding physical addresses within System 102's physical address space, for example. MM 106, and operates as a cache mechanism to fetch and store operands and instructions in advance of CPU 122 operations. In this respect, and as will be described further below, AGU 124 and CPU 122 operate together with ATU/C 126 to provide overlap of instruction fetching, instruction decoding, operand fetching and instruction execution.

As shown in Fig. 8, ATU/C 126 includes an Address Translation Unit (ATU) 802 and a Data Cache (DC) 804, which will be described in that order. ATU 802 comprises the address path between VA Bus 700 and SA Bus 116 and includes, in part, a cache mechanism for translating virtual addresses into physical addresses. DC 804 is the data path between DB Bus 600 and SD Bus 118 and includes a cache mechanism for fetching and storing instructions and operands. It should be noted that, in as much as cache mechanism are well known to those of ordinary skill in the art, the conventional cache mechanism aspects of ATU 802 and DC 804 will not be described in full detail in the following. Those aspects of ATU 802 and DC 804 which are relevant to the present invention will, however, be described in detail.

### C.3.a ATU 802 (Figs. 8)

As described above, ATU 802 receives virtual addresses referring to instructions and operands from AGU 124 and translates those virtual addresses into the corresponding physical addresses of the instructions and operands in System 102's physical address space, that is, in DC 804 or MM 106. Referring briefly to the previous
description of the virtual to physical address translation
operation, it was shown that virtual address space is divided into
logical pages containing information and that information within a
virtual page could be addressed to the byte level. System 102's
physical address space is divided into page frames, each page frame
containing one virtual page of information and the information
therein also being addressable to the byte level. The particular
virtual page of information residing in a particular page frame is
dependent upon the operations currently being performed by System
102, with virtual pages being swapped between System 102's physical
address space, that is, MM 106, and virtual memory, for example, a
disc unit, as required.

Virtual and physical addresses are each comprised of 24 address
bits. A virtual address is comprised of a 13 bit virtual page number
field identifying the virtual page containing the information
addressed and an 11 bit  byte index field identifying the location
of a particular byte of information within that virtual page. A
corresponding physical address is similarly comprised of a 13 bit
page frame number field, corresponding to the page number field of a
virtual address, and an 11 bit  byte index field corresponding to
the byte index field of the virtual address.

It should be noted that there is a one to one correspondence of byte addresses between a virtual page and the corresponding physical page frame assigned to contain that virtual page. That is, the variable relationship between virtual pages and physical page frames is in which page frame is assigned to hold which virtual page, not in the corresponding internal structures of the page and page frame. As such, the translation of virtual addresses to physical addresses is essentially one of translating virtual page number fields into their corresponding page frame number fields; the byte index field of a virtual address may be used directly, that is, without translation, as the byte index field of the corresponding physical address.

It should further be noted the internal structure of programs is generally such that sequences of instructions and groups of data elements occupy contiguous address locations, that is, sequential, adjacent addresses. As such, many address translations occur within a given page; that is, only the byte index field of the virtual and corresponding physical addresses may change in, for example, selecting the next instructions of an instruction sequence or the next data element from a group of data elements. A page field to page frame field translation will occur, however, when crossing page and page frame boundaries.

Referring now to Fig. 8 and considering first the basic cache mecnanism structure of ATU 802, as shown therein ATU 802 includes an Address Translation Store (ATS) 806 for encaching physical page
frame fields corresponding to virtual page numbers. Associated with
ATS 806 is a Translation Tag Store (TTS) 808 with associated Tag
Store Comparator (TSC) 810 and a Protection Mechanism Store (PRT)
812.

As in a conventional cache mechanism, TTS 808 stores tags
representing physical page frame fields encached in ATS 806. As
shown in Fig. 8, TTS 808 has an address input connected from VA Bus
700 to receive the page number fields of virtual addresses appearing
thereupon. Such virtual page number fields are hashed and the
hashing results used as address inputs to TTS 808. If TTS 808
contains a tag corresponding to such an address input, that tag will
be provided as an output, thereby indicating that ATS 806 may
contain an encached physical page frame number corresponding to that
virtual page number. These tags are compared to the page number
fields of the virtual addresses by TSC 810, which provides a
corresponding output if a physical page frame field corresponding to
a particular virtual address page number field is stored in ATS 806.
As indicated in Fig. 8, for example, TSC 810 provides a Long Address
Translation (LAT) output whenever a virtual address page number
field occurs which does not have a corresponding physical address
page frame number field encached in ATS 806. This output then
initiates a microroutine which performs the necessary virtual to
physical address translation.

PRT 812 stores information pertain to System 102's protection
mechanism, that is, information regarding access to stored data and
programs by the currently executing process. As shown in Fig. 8, PRT
has an address input connected from VA Bus 700 and, in response to
each virtual address appearing on VA Bus 700, provides an indication
whether the intended operation with respect to the information
residing at that address is permissible. If the access is not
allowed, a suitable protection microroutine is initiated.

Referring again to ATS 806, associated with ATS 806 is a Virtual
Address Hashing Buffer (VAH) 814 and a Virtual Address Buffer (VAB)
816. Together with ATS 806, these elements comprise the actual
virtual to physical address translation mechanism and, as described
below, provide physical address outputs to 32 bit Address
Translation Local (ATL) Bus 818, Physical Instruction Address
Register (PIAR) 820 and Physical Address Register (PAR) 822 in
response to virtual addresses appearing on VA Bus 700.

VAH 814 receives virtual address page number fields from of virtual
addresses from VA Bus 700 and hashes these fields to provide address
inputs to ATS 806. This addressing input is used both to read
encached physical page frame number fields from ATS 806 and to
encache, that is, write, physical page frame number fields into ATS
806.

-60-

VAB 816 is a buffer register connected from VA Bus 700 to receive and store addresses appearing on VA Bus 700. In a first aspect, VAB 816 is used as the data path to encache, that is, write, physical page frame number fields into ATS 806 and has a first 13 bit output connected to the data input of ATS 806 for this purpose. VAB 818 is also used as an ATU 802 address output path for physical addresses generated directly by CPU 122 and has a 32 bit output connected to ATL 818 to pass physical addresses generated by CPU 122 directly through to ATL Bus 818.

Considering now the translation of virtual to physical addresses, as describe above each physical address is comprised of a physical page frame number field and a byte index field. These fields correspond, respectively, to the virtual page number fields and byte index fields of virtual addresses. As also described above, the byte index field of a virtual address may be used directly as the byte index field of the physical address while the virtual page number field must be translated into the corresponding physical page frame number field.

VAB 816 is the source of byte index fields in virtual to physical address translations and has, for this purpose, a third, 11 bit byte index field output. As shown in Fig. 8 and described further below, the byte index field output of VAB 818 is connected to inputs of PIAR 820 and PAR 822.

ATS 806 is, as previously described, the source of physical page frame number fields in virtual to physical address translations and has, for this purpose, a 13 bit page frame number field output connected to ATL Bus 818. As shown in Fig. 8 and described further below, PIAR 820 and PAR 822 have 13 bit page frame number field inputs connected from ATL Bus 818 for receiving the page frame number fields of physical addresses from ATL Bus 818.

As indicated in Fig. 8, ATU 802 is provided with two physical address output paths from ATS 806 and VAB 816, the first through ATL 818 and to DB Bus 600 and the second through the physical address registers, including PIAR 820 and PAR 822, and Physical Address (PA) Bus 800. Considering first ATL 818, ATL 818 is connected to DB Bus 600 through 32 bit bidirectional Physical Address Buffer (PAB) 824 and physical addresses from VAB 816 and physical address page frame number fields from ATS 806 may be read to DB Bus 600 through PAB 824. Similarly, physical addresses appearing on DB Bus 600, for example, generated by CPU 122, may be read onto ATL Bus 818.

Considering the physical address output path through the physical address registers and to PA Bus 800, ATU 802 is provided with separate physical address for instructions and data. That is, PIAR 820 stores and provides physical addresses for instructions while PAR 822 stores and provides physical addresses for data. As will be described further below, the provision of separate instruction and data address registers allows overlap of instruction and operand fetching, that is, the fetching of both instructions and operands in a single CPU 122 cycle.

As previously described a physical address is defined to be 24 bits but may be extended to 31 bits. The address field comprising the physical address extension resides as part of the Program Control Word and may be read from CPU 122 and through VA Bus 700 and VAB 816 to ATL Bus 818. As shown in Fig. 8, the physical address registers further include a Physical Address Extension Register (PARX) 828 having an input connected from ATAL Bus 818 for receiving and storing the physical address extension field. The output of PARX 828 is, as described further below, provided to PA Bus 800.

Referring again to PIAR 820 and PAR 822, as shown in Fig. 8 PIAR 820 and PAR 822 are each provided with a first 13 bit input from ATL Bus 818 for receiving physical page frame number fields from ATL Bus 818. As previously described, the source of these page frame number fields may be either ATS 806 or a physical address transferred from CPU 122 and VA Bus 700 through VAB 816. PIAR 820 and PAR 822 are also each provided with a second 11 bit byte index field input from the corresponding output of VAB 816. Again as previously described, the source of such byte index fields may be either virtual addresses received by VAB 816 from AGU 124 or physical addresses received by VAB 816 from CPU 122.

The provision of separate page frame number and byte index field sources and inputs for PIAR 820 and PAR 822 enhances, in certain conditions, the speed with which virtual to physical address translations are performed. As previously described, the internal structure of instruction sequences and data elements within a program is generally such that many address translations occur within a given page. When a sequence of such addresses occurs, that is, a sequence of addresses within a single page, the address translation does not require the generation of a new physical page frame number field for each address. That is, the physical page frame number field remains the for each address in the sequence and only the byte index field changes. The provision of separate sources and inputs to PIAR 820 and PAR 822 for the page frame number and byte index fields accordingly allows a page frame number field contained therein to remain constant while new byte index fields are loaded from VAB 816. The translation of virtual to physical addresses for sequences of addresses within a given page may therefore proceed at the rate at which AGU 124 can provide new byte index fields, rather than the rate at which the ATU 802 cache mechanism can translate page number fields to page frame number fields. The speed of translation from virtual to physical addresses is thereby enhanced for address references within a single page.

As described above, the primary physical address output path of ATU 802 is through 32 bit Physical Address (PA) Bus 800. As shown in

Fig. 8, the physical address outputs of PIAR 820 and PAR 822 are connected to PA Bus 800 through Physical Address Multiplexer (PAM) 826, so that either PIAR 820 or PAR 822 may be selected as the current source of a physical address, depending upon whether an instruction or an operand is to be addressed. The address extension field output of PARX 828 is directly connected to PA Bus 700, thereby providing 31 bit addressing as required.

As shown in Fig. 8, PA Bus 700 provides physical address outputs to SA Bus 116 through System Address Driver (SAD) 830, for direct reads from and writes to MM 106, and to Data Cache (DC) 804. DC 804 will be described next below, after Write Instruction Queue Detect (WIQD) 832 has been described.

As previously described, the instruction queue is capable of storing at least two instructions at a any given time. As such, a write operation resulting, for example, from the execution of a current instruction, may modify in some respect the original copy in MM 106 or DC 804 of an instruction which is currently residing in the instruction queue and awaiting execution. Should such an event occur, as may, for example, in the case of self modifying code, the copy residing in the instruction queue is no longer valid and must be replaced with the new original.

-65-

As shown in Fig. 8, WIQD 832 has a first address input connected from PIAR 820, representing the address of the instruction currently being fetched, and a second address input connected from PA Bus 700 and representing, for example, an address currently being written to. WIQD 832 is able to determine, from the first input from PIAR 832, the range of addresses of the instructions currently residing in the instruction queue and compares current write addresses to the instruction queue address range. Should a write operation occur within the range of addresses currently residing in the instruction queue, WIQD 832 will initiate a microcode routine to discard the current contents of the instruction queue and to refill the instruction queue from MM 106 or DC 804, thereby replacing a modified instruction in the queue with the new original of the instruction. WIQD 832 thereby insures that the instruction queue always contains the currently valid version of the code being executed.

Having described the structure and operation of the ATU 802 portion of ATU/C 126, DC 804 will be described next below.

### C.3.b Data Cache (DC) 804 (Fig. 8)

As previously described, DC 804 is the data path between DB Bus 600 and SD Bus 118 and includes a cache mechanism for fetching and storing instructions and operands in advance of the operations of CPU 122. Again, in as much as cache mechanism are well known to those of ordinary skill in the art, the conventional cache mechanism aspects of DC 804 will not be described in full detail in the following. Those aspects of DC 804 which are relevant to the present invention will, however, be described in detail.

As shown in Fig. 8, DC 804 includes a Data Store (DS) 834 which comprises the data cache memory portion of DC 804. As will be described further below, DS 834 comprises the input path from SD Bus 118 to DB Bus 600, that is, all data and instructions provided to PU 104 are encached in DS 834 and provided from DS 834 to the remaining elements of PU 104. As will also be described further below, the output path from DB Bus 600 to SD Bus 118 is similarly comprised of logic and bus elements associated with DS 834 and DS 834 is involved in writes of data from PU 104 to MM 106.

As previously described, SD Bus 118 is 8 bytes, that is, 64 bits or one double word, wide. All information transfers between DC 804 and MM 106 are of double words and information is stored in DS 834 and written into and read from DS 834 in double words. While information is read from DS 834 one double word at a time, DS 834 is a variable block size cache and information may be written into DS 834 in blocks containing one or more double words.

In the present implementation, DS 834 write block size is selectable by microcode and may contain contain one, two or four double words, depending upon the purpose for which a block write to DS 834 is performed. In the event of a cache fetch miss, for example, a block write of four double words is performed, thereby transferring 32 bytes of data or instructions into DS 834. Because of the previously described logical structure of programs, that is, that sequences of instructions and related data elements are generally located in contiguous addresses, a four double word block transfer will thereby often provide a following 32 bytes of cache hits before another block write is required.

The writing of information into DS 834 and the reading of information from DS 834 is controlled by physical addresses provided from ATU 802 through PA Bus 800. As shown in Fig. 8, the address input of DS 834 is connected from the output of Data Store Address Buffer (DSAB) 836 which, in turn, is connected from PA Bus 800.

As described above, DS 834 comprises, in part, the input path from SD Bus 118 to DB Bus 600 and elements associated with the DS 834 cache mechanism comprise the output path from DB Bus 600 to SD Bus 118. Considering first the input path, as shown in Fig. 8, DC 804 contains an internal bidirectional Data Cache (DC) Bus 838 which is connected from SD Bus 118 through bidirectional System Data Bus Transceiver (SDX) 840. DC Bus 838 is in turn connected to the data

-68-

input of DS 834, thereby comprising, with SDX 840, the path through which information is written from SD Bus 118 and into DS 834. As will be described further below, DC Bus 838 and SDX 840 also comprise a portion of the output path from DB Bus 600 to SD Bus 118.

The 64 bit (double word) data output of DS 834 is connected to 64 bit Data Store Latch (DSL) 842 and DSL 842 in turn provides a 64 bit output to Read Transport Reordering Buffer (RTRB) 844. As previously described, information is read from DS834 in double words while DB Bus 600 is a single word (32 bits) wide. Moreover, most CPU 122 operations are performed on data elements of less than a double word, that is, upon bytes, half words (double bytes) and words, and a data element to be operated upon by CPU 122 may not be located upon a double word boundary. RTRB 842 is essentially a right/left shifter and multiplexer for performing per byte shift and word select operations on double words read from DS 834. RTRB 842 thereby allows bytes, half words and words to be extracted from double words read from DS 834 and formatted into single 32 bit words to be provided to DB Bus 600.

In addition to the path through DS 834, a cache bypass path is provided, as shown in Fig. 8, from DC Bus 838 to the output of DS 834, that is, to the input of DSL 842. This path may be used during a load of DS 834 arising from a cache miss to decrease the time required to provide the requested information. That is, a request

-69-

for data or instructions that results in a cache miss will initiate
a block load operation to encache the requested information, plus
the other contents of the block, in DS 834. Rather than waiting
until the block load is completed and then reading the requested
information from DS 834, the requested information may be provided
to DSL 842 through the bypass path at the same time that the
information is being written into DS 834.

As shown in Fig. 8, the single word (32 bit) output of RTRB 842 is
connected to bidirectional Read Transport (RT) Bus 846. RT Bus 846
is in turn connected to DB Bus 600 through bidirectional DB Bus
Transceiver (DBX) 848, thereby allowing information read from DS 834
to be transferred onto DB Bus 600 to CPU 122 and AGU 124. As will be
described next below, RT Bus 846 and DBX 848 also comprise a part of
the output path from DB Bus 600 to SD Bus 118.

Considering now the output path from DB Bus 600 to SD Bus 118, the
physical path will be described first, followed by a further
description of the operation this path and of DS 834 with respect to
writes of information to MM 106.

As shown in Fig. 8 and as described just above, the first part of
the path from DB Bus 600 to SD Bus 118 includes the bidirectional
bus transceiver DBX 848 and bidirectional RT Bus 846. That is,

-70-

information may be read, in 32 bit single words, from DB Bus 600 and onto RT Bus 846 through DBX 848.

As shown in Fig. 8, the single word wide RT Bus 846 is connected to a first input of Write Merger (WRTMRG) 850 and the double word wide output of DSL 842 is, as described further below, connected to a second input of WRTMRG 850. The double word output of WRTMRG 850 is connected to DC Bus 838. As previously described, DC Bus 838 is connected to SD Bus 118 through SDX 840, so that double words appearing at the output of WRTMRG 850 may be written to SD Bus 118 and thus to MM 106.

Considering now the operation of DS 834 and associated logic with respect to the writing of information back to MM 106, the operation of DC 804 in performing writes to MM 106 will be better understood after the general problem has been described below.

As previously described, all transfers of information between DC 804 and MM 106 are of double words and information is stored in MM 106 in double words. As such, a byte, half word or word to be written into MM 106 must be transferred to MM 106 in a double word and must be written into its address location within the double word stored therein containing that address location.

-71-

In a conventional system, this operation is usually performed in the system memory by a read-modify-write operation. That is, the information to be written is formatted into a double word, the unused bits of the double word being filled, for example, with zeros, and the zero filled double word transferred to memory. In the memory, the double word containing the address location wherein the information is to be written is read from memory, modified to contain the information bits from the zero filled double word, and written back into memory.

A further problem with respect to the writing of information to system memory arises in any system containing a cache for storing instructions and data in advance of system operations. That is, the cache contains copies of certain of the information stored in MM 106 and a write to MM 106 may result in a modification to the original version of the information residing therein, so that the encached copy of the information in DS 834 no longer corresponds to the new version in MM 106. In a conventional system, this problem is often handled by re-encaching the modified information from memory after the information in memory has been updated by a read-modify-write operation as described above.

Having described the general problems of writing information back from CPU 122 to MM 106, the operation of DC 804 in performing such writes will be described below.

As previously described, the internal logical structure of programs is such that, very frequently, sequences of instructions and groups of data elements occupy contiguous address locations, that is, sequential, adjacent addresses. As also previously described, all information read into PU 104 from MM 106, whether data or instructions, is encached in DS 834 in blocks of 8 to 32 bytes, that is, one to four double words. As such, there is a significant probability that, for any given write operation, the information element located at the write address is encached and thus available in DS 834.

In System 102 writes from CPU 122 to MM 106 wherein the element located at the write address is encached in DS 834, the write operation is performed by a write-merge operation in DC 804, rather than by a read-modify-write operation performed by MM 106 and followed by a reload of the cache. In the write-merge operation, the write address is used to read the encached information element from DS 834 to DSL 842 and the second, double word wide input of WRTMRG 850. At the same time, the word containing the information to be written is provided from CPU 122 and DB Bus 600 to the first, single word wide input of WRTMRG 850. In this respect, it should be noted that, as previously described, the functionality of CPU 122 includes the capability to format information generated therein into a single, 32 bit word to be used as the write-back input to WRTMRG 850.

-73-

HRTMRG 850 is essentially a multiplexer which replaces those portions of the double word read from DS 834 that correspond to the information to be written with the information to be written back to MM 106. HRTMRG 850 then provides as an output a new double word which contains, in the appropriate byte locations therein, the information to be written to memory and the original, unmodified portions of the double word read from DS 834. This new double word is then written into DS 834, overwriting and replacing the original double word residing therein so that the updated information is immediately available from DS 834. At the same time, the new double word is written to MM 106 through SDX 840 and SD Bus 118, wherein it is written over the the original double word residing therein, thereby updating the contents of MM 106.

DS 834 is thereby updated at cache operation speeds, rather than at memory modification and cache reload speeds, and MM 106 is updated at memory write speeds rather than at memory read-modify-write speeds. The cache based write-merge operation thereby provides a significant improvement in the speed of operation of both the cache and system memory in performing writes to memory.

Further examples of the operation of DC 804 in performing writes to memory are seen in memory to memory operations and in string move operations. In memory to memory moves, information is read from a first, source memory location and written into a second, destination

-74-

memory location. String moves are essentially comprised of a
sequence of memory to memory moves wherein data elements are read in
sequence from a first sequence of addresses and written, in the same
sequence, into a second, corresponding sequence of addresses.
Considering first the memory to memory move operation, the first
step in each such operation is a read, so that the information to be
moved will thereby be encached in DS 834. Because the information is
encached on a block basis, it is probable that the destination
address of the move operation will also be encached in DS 834. The
move is then performed by reading the information to be moved from
its source address in DS 834 and through DSL 842 and RTRB 844 to the
first, single word wide input of WRTMRG 850. The information located
at the destination address is then read from DS 834 and provided to
the second, double word wide input of WRTMRG 850 and the source
information merged with the destination double word to create a new
destination double word. As previously described, the new
destination double word is then concurrently written back into DS
834 and MM 106, overwriting the original destination double words
residing therein.

A string move is performed in a similar manner, that is, as
described above, as a sequence of memory to memory moves until the
string has been moved from the first sequence of source address
locations to the second sequence of destination address locations.
It should be noted that, as previously described, VAR 714 has been provided in AGU 124 to enhance the speed with which the sequence of source and destination addresses may be generated in string move operations. It should be further noted, and in particular in string moves, that such a move will most probably take place within the address space of a single logical page, that is, within a single physical page frame. As such, the translation of the source and destination virtual addresses to source and destination physical addresses will not require full address translations. That is, as previously described a sequence of virtual to physical address translations within a given page does not require the generation of a new page frame number for each new address, but merely the transfer of the new byte index field from the virtual address to the physical address. In a string move, therefore, both the actual information move and the sequence of address generations and translations may take place at maximum cache speeds.

Finally, it should be noted that, in the present implementation of System 102, the write-merge operation is not used for writes to MM 106 if the destination address information is not encached in DS 834 either as the result of a previous operation or as a part of the operation resulting in the write to MM 106. In such cases, wherein the destination address information is not encached in DS 834, System 102 uses the previously described conventional memory read-modify-write operation. In alternate embodiments. however, it may be advantageous to encache the destination address information in DS 834 and to execute the write-merge operation for all writes to MM 106, even if the encachment must be performed specifically for a particular write operation.

Having described the operation of DC 804 with respect to input and output paths and write-merge operations, the structure and operation of certain elements of the cache mechanism associated with DS 834 will be described next below.

As in most conventional cache mechanisms, DC 804 includes, in association with DS 834, a memory for storing parity information pertaining to the information encached in DS 834 and memories for storing tag and tag validity information pertaining to DS 834 entries. The parity and tag validity bit memories are not shown in Fig. 8 and will not be described further below as being well known to those of ordinary skill in the art. The operation of tag store memory will be described further below, however, as being of further interest with respect to the operation of DC 804.

As shown in Fig. 8, there is associated with DS 834 a Data Tag Store (DTS) 852 for storing and providing tags associated with the double word information elements encached in DS 834. The complete structure of DTS 852 is not shown in Fig. 8 and the operation of DTS 852 will not be described in full detail herein as the structure and

-77-

operation of a similar tag store (TTS 808) has been previously described.

As previously described, a problem exists in any system incorporating a cache mechanism in insuring that the contents of the cache correspond at all times to the contents of the system memory. The operation of DC 804 with respect to maintaining correspondence between the contents of MM 106 and DS 834 for MM 106 write operations originating from PU 104 has been described above. A further problem exists, however, with respect to MM 106 write operations, such as writes from SBI 110, not originating from PU 104.

As shown in Fig. 8, the address input of DTS 852 is connected from Tag Store Address Multiplexer (TSAM) 854, which in turn has a first input connected from PA Bus 800 for the usual tag checking and addressing of DS 834. TSAM 854 also has a second input connected from SA Bus 116 through External Memory Address Latch (XMAL) 856 to receive all MM 106 write addresses provided from sources external to PU 104, that is, to detect all MM 106 write operations not originating from PU 104. For each external MM 106 write operation, therefore, the contents of DTS 852 will be addressed and checked to determine whether DTS 852 contains a corresponding tag and, accordingly, whether DS 834 contains an entry corresponding to the external write address.

The tag output of DTS 852 and the output of TSAM 854 are provided to inputs of Tag Store Pipeline (TSPL) 858, which thereby receives and stores the hashed external write addresses and corresponding DTS 852 tags, if any. TSPL 858 is provided as a pipelined register because of the pipelined operation of PU 104 and, as described further below, of MM 106. The hashed external write addresses and corresponding tags read from DTS 858 are then provided to Tag Store Comparator (TSC) 860, which compares the hashed external write addresses and tags to determine whether DTS 834 contains an entry corresponding to the destination address of an external write operation to MM 106. If such a coincidence occurs, a microroutine is initiated to reload and update the corresponding contents of DTS 834 to correspond to the modified contents of MM 106.

Having described the structure and operation of ATU/C 126, that is, ATU 802 and DC 804, the operation of CP 602, AGU 124, ATU 802 and DC 804 to perform the interleaved and overlapped fetching of instructions and operands to, respectively, AGU 124 and CP 602 will be described next below.

### C.3.c Fetching of Instructions and Operands (Fig. 8A)

As described above, DC 804 operates in part to fetch and store instructions and operands from MM 106 in anticipation of the operations of PU 104 and to provide these instructions and operands to, respectively, AGU 124 and CPU 122 as required. DC 804 further operates as the write-back path from CPU 122 to MM 106 for operands resulting from the operations performed by CPU 122. As also previously described, the reading and writing of operands between DC 804 and CP 602 are performed in response to operand read/write addresses provided through the operation of AGU 124 and ATU 802's PAR 822. The reading of instructions from DC 804 to AGU 124, that is, to IQ 702, is performed in response to next instruction addresses provided through the operation of CP 602 and ATU 802's PIAR 820.

The speed of operation of PU 104, and in particular of CPU 122, is determined in part by the speed with which instructions and operands may be transferred from DC 804 to CPU 122 and AGU 124 and the results of CPU 122 operations transferred to DC 804 for subsequent transfer to MM 106. For this reason, CPU 122, AGU 124 and ATU/C 126 are designed to interactively cooperate in an overlapped and interleaved instruction/operand read/write cycle so that there is effectively a continuous flow of instructions and operands between DC 804 and CP 122.

The operation of the individual elements of PU 104 which execute this read/write cycle, that is, CP 122, AGU 124, ATU 802, including PAR 822 and PIAR 820, and DC 804, have been described above. The cooperative operation of these elements to perform the overlapped read and write of instructions and operands through DB Bus 600 will now be described.

Referring to Fig. 8A, therein is represented a timing diagram illustrating the overlapped fetching of instructions and operands to AGU 124 and CPU 122 and the writing of operands from CPU 122 to DC 804. Fig. 8A represents an illustrative window into what is effectively a continuous sequence of events, that is, the fetching of instructions and operands and writing back of results during the execution of a program. The sequence of events appearing in Fig. 8A has been selected to illustrate typical operations which may occur in the fetching and writing of instructions and operands by the elements of PU 104 during the execution of a program.

It should be noted that the following descriptions refer to the fetching of an "instruction" in each CPU 122 cycle. As previously described, the width of DB Bus 600 is 32 bits, so that 32 bits, or one word, are fetched through DB Bus 600 in each operation. The length of a given instruction, however, may be 16, 32, 48 or 64 bits. As such, the fetching of an "instruction" in the following descriptions is used to refer to the fetching of 32 instruction bits as a word, rather than the fetching of an actual instruction. That is, the 32 instruction bits comprising the fetched "instruction" may comprise an instruction, two instructions, a part of an instruction, or a combination thereof.

Referring to the topmost line of Fig. 8A, therein is represented the System Clock (SYSCLK) from which the timing of all PU 104 operations is derived. In the present embodiment of System 102, SYSCLK has a period of 60 nanosecond (ns).

A series of time marks, t1 to t20, is represented above SYSCLK with each time mark appearing coincident with the start, or rising edge, of a SYSCLK period. These time marks provide a time reference scale which will be referred to during the following descriptions. In this regard, it should be noted that the following discussions will be directed to the events which occur within the window of t1 to t20, and that events occurring before t1 and overlapping into the t1 to t20 window, or after the window, will not, for clarity of presentation, be discussed. It should be remembered, however, that the events illustrated in the t1 to t20 window and described are an illustrative portion of a continuous sequence of events.

The second line of Fig. 8A is a representation of CPU Clock (CPUC), which is generated by the operation of CPU 122 and essentially represents the state of execution of CPU 122 operations. In the present embodiment of System 102, a CPUC cycle is the time required to perform a single operation, that is, to execute a single instruction. As indicated in Fig. 8A, the start of the execution of an instruction is indicated by a rising edge of CPUC and the end of the CPUC period, that is, the beginning of the next CPUC period, is indicated by the next rising edge of CPUC indicating the start of

-82-

execution of the next instruction. As shown in Fig. 8A, the basic period of CPUC, that is, the time required to execute a single instruction, is 120 ns. A CPUC period may, however, be extended in 60 ns increments, that is, in SYSCLK periods, as required for certain operations, for example, as the result of a microcode branch or when it is necessary for DC 804 to fetch a requested operand or instruction from MM 106.

The next three lines of Fig. 8A are respectively titled CPU Address (CPUA), CPU Data (CPUD) and CPU Load (CPUL). These lines respectively represent the providing of an operand read or write address to DC 804 from PAR 822, the appearance of an operand on DB Bus 600 in response to an operand read or write address, and the loading of an operand into CPU 122 in a read operation or into DC 804 in a write operation.

The last four lines correspond in part to the three lines representing CPU read and write operations but represent the reading of instructions from DC 804 through DB Bus 600 and the loading of such instructions into IL 704 and IQ 702. The line titled IQ Address (IQA) represents the providing of an instruction address to DC 804 from PIAR 820 and the line titled IQ Data (IQD) represents the appearance of an addressed instruction on DB Bus 600 from DC 804. The line titled IL Latch (ILL) represents the latching of an instruction from DB Bus 600 and into IL 704 and the line titled IQ Load (IQL) represents the loading of an instruction from IL 704 and into IQ 702.

For the purposes of the present illustration, the sequence of events selected to be shown in Fig. 8A are, in order, two reads of operands from DC 804 to CPU 122, a write of an operand from CPU 122 to DC 804, a read of an operand from DC 804 to CPU 122 which requires a fill of DC 804 from MM 106, and, finally, two CPU 122 operations not requiring either a read or a write of an operand. As will be described below, an instruction is fetched to IQ 702 during each CPU cycle, with operand reads and writes and the fetching of instructions being overlapped and interleaved so that both an instruction fetch and an operand read or write may be performed in each CPU cycle.

Referring to Fig. 8A, at t1 an operand read is pending and, as indicated by CPUA, an operand address is placed on PA Bus 800 from PAR 822 at the start, or rising edge, of the CPUC period beginning at t1.

60ns later, that is, at t2, the instruction fetch for this CPUC cycle is initiated by the placing of an instruction address on PA Bus 800 from PIAR 822, as indicated by IQA. It should be noted that while the instruction address is indicated as occurring at the falling edge of CPUC at t2, this event is not triggered by the falling edge of CPUC. That is, when an operand read or write is being performed in a given CPUC cycle, the operand read or write address will always occur at the rising edge of CPUC and the instruction address will always occur 60 ns later, that is, at the next SYSCLK, regardless of whether CPUC has a falling edge at that time.

Also at t2, and as indicated by CPUD, DC 804 responds to the operand read address provided at t1 by placing the requested operand on DB Bus 600. The 60 ns, or one SYSCLK period, occurring between the providing of an address to DC 804 and the appearance of a corresponding output from DC 804 represents the response time of DC 804 when the requested operand or instruction is encached therein, that is, DC 804 will always respond to an operand or instruction address at the next SYSCLK period after receiving an address if the requested operand or instruction is encached in DC 804.

At t3 there occurs another rising edge of CPUC, indicating the start of the next CPUC cycle and the start of the execution of the next CPU 122 operation. At this time, the operand read address for the next operand read operation is provided to DC 804 from PAR 820, as indicated by CPUA, and the operand which appeared on DB Bus 600 at a result of the previous operand read address is, as indicated by CPUL, latched into CPU 122.

Also at t3, and as indicated by CPUD, the instruction read from DC 804 as a result of the instruction address provided at t2 appears on DB Bus 600.

At t4, and as indicated by CPUD, the operand requested by the operand read address provided at t3 appears on DB Bus 600. Also at t4, as indicated by IQA, the instruction fetch of the second CPUC cycle is initiated by the providing of the next instruction address to DC 804 from PIAR 822. Again, this instruction address appears 60 ns after the start of this CPUC cycle at t3.

Also at t4, and as indicated by ILL, the instruction which appeared on DB Bus 600 in response to the instruction address provided at t2 is latched into IL 704. It should be noted that the latching of an instruction from DB Bus 600 and into IL 704 is triggered by the falling edge of CPUC which occurs in the next CPUC cycle after the CPUC cycle in which the corresponding instruction address was provided to DC 804. In this example, the falling edge of CPUC in the CPUC cycle after the instruction was addressed has occurred at t4.

At t5, there is again a rising edge of CPUC, indicating again the start of the next CPUC cycle and the start of the execution of the next CPU 122 operation. At this time, the operand write address for the operand write operation is provided to DC 804 from PAR 820, as indicated by CPUA, and the operand which appeared on DB Bus 600 at a result of the previous operand read address is, as indicated by CPUL, latched into CPU 122.

Also at t5, and as indicated by CPUD, the instruction read from DC 804 as a result of the instruction address provided at t4 appears on DB Bus 600.

Also at t5, and as indicated by IQL, the instruction which was latched into IL 704 by the falling edge of CPUC at t4 is loaded into IQ 702.

It should be noted that the loading of instructions from IL 704 and into IQ 702 is controlled by the rising edge of CPUC, that is, any instruction which was latched into IL 704 upon a falling edge of CPUC may, as described below, be loaded into IQ 702 upon the next occurring rising edge of CPUC. In this case, the next rising edge of CPUC has occurred at t5.

At this point, it should be noted that an instruction appearing on DB Bus 600 in response to an instruction address will always be latched into IL 704 upon the next falling edge of CPUC. The instruction, however, will not necessarily be loaded into IQ 702; that is, if IQ 702 is full, IQ 702 will not accept an instruction from IL 704.

-87-

A conflict between the fetching and latching of an instruction each CPUC cycle and the non-loading of instructions into IQ 704 if IQ 704 is full is avoided for two reasons. The first is that in normal operation an instruction is executed in each CPU cycle, so that IQ 702 will be ready to receive a new instruction at the end of each CPU cycle. That is, instructions are moved up in the IQ 702 queue as they are executed, so that space to receive a new instruction from IL 704 becomes available in the queue at the end of each CPU cycle when the previously enqueued instructions are moved up.

Secondly, an instruction address residing in PIAR 822 is changed to represent a new instruction only when the previous instruction has been completed. Therefore, in any case wherein an instruction requires more than one CPUC cycle for completion, the same instruction address will be provided to DC 804 in each CPUC cycle occurring during completion of the instruction. The result will be that the same instruction will be read from DC 804 and latched into IL 704 in each CPUC cycle required to complete the instruction. IL 704 will therefore merely receive repetitive copies of the same instruction, each copy being written over the previous copy, until the instruction is completed and IQ 702 is ready to receive the new instruction from IL 704.

Returning to Fig. 8A, at t6 the operand to be written into DC 804 in response to the operand write address provided at t5 is placed upon DB Bus 600, as indicated by the state of CPUD, and the address of the next instruction to be fetched is provided to DC 804, as indicated by the state of IQA.

Also at this time, the instruction appearing on DB Bus 600 at t5 in response to the instruction address provided at t4 is latched into IL 704 by the falling edge of CPUC occurring at t6.

At t7, there is again a rising edge of CPUC, indicating again the start of the next CPUC cycle and the start of the execution of the next CPU 122 operation. At this time, the operand read address for the next operand read operation is provided to DC 804 from PAR 820, as indicated by CPUA. As described above, this read operation was selected, in the present example, to illustrate operand and instruction fetch operation when a requested operand is not encached in DC 804 and must be fetched from MM 106.

Also at this time, the operand placed on DB Bus 600 by CPU 122 in the write operation initiated by the operand write address provided at t5 is latched into DC 804 by the rising edge of CPUC, as indicated by CPUL.

Also at t7, the instruction read from DC 804 as a result of the instruction address provided at t6 appears on DB Bus 600, as indicated by IQD, and the instruction latched into IL 704 is loaded into IQ 704 by the rising edge of CPUC, as indicated by IQL.

At t8, the instruction appearing on DB Bus 600 at t7 because of the instruction address provided at t6 is latched into IL 704 by the falling edge of CPUC.

As described above, the operand fetch operation initiated at t7 was selected to illustrate a fetch operation wherein DC 804 must fetch the requested operand from MM 106. The time required to read the addressed operand from MM 106 and for the operand to appear at the output of DC 804 is represented in the present illustration as the delay between t7, when the operand address was presented to DC 804, and the appearance of the operand on DB Bus 600 at t10, as indicated by CPUD.

As indicated in Fig. 8A, and in particular by CPUC, the operation of CPU 122 is effectively suspended during this period, that is, the CPUC cycle started at the rising edge of CPUC at t7 is extended to t11. At t11, the next CPU 122 operation is begun, as indicated by the rising edge of CPUC, with the operand being latched into CPU 122 by the rising edge of CPUC. The instruction addressed at t6 and latched into IL 704 at t8 by the falling edge of CPUC is also loaded into IQ 702 at t11 by the rising edge of CPUC.

-90-

It should be noted that, while the above sequence of event illustrated the case wherein a requested operand was not encached in DC 804, the events would follow a similar sequence in the event that an instruction must be fetched from MM 106. That is, the operand/instruction fetching sequence would be suspended until the instruction appeared upon DB Bus 600 and would then resume at that point.

As previously described, the next two CPU 122 cycles were selected, for this example, to illustrate the fetch of instructions in CPU 122 cycles wherein no operands are being read or written. These two CPU cycles begin at, respectively, t11 and t13 and, as indicated to CPUA, no operand addresses are presented to DC 804 at these rising edges of CPUC.

Since no operand reads or writes are pending at the starts of these two CPU cycles, instruction addresses are presented to DC 804 at the rising edges of CPUC occurring at t11 and t13, rather than 60 ns after these rising edges. The corresponding instructions appear on DB Bus 600 60 ns after the addresses are presented to DC 804, that is, at t12 and at t14, as indicated by IQD.

These instructions are respectively latched into IL 704 on the next occurring falling edges of CPUC, that is, at t12 and at t14, as indicated by ILL, and are loaded into IQ 702 on the next occurring rising edges of CPUC, that is, at t13 and at t15, as indicated by IQL.

The exemplary sequence of operations selected for this example are thereby completed at t15 and, as shown in Fig. 8A, the following operations resume a sequence of operations wherein there is a read or write of an operand and the fetch of an instruction during each CPU cycle.

To summarize the above described operation of the fetch/write mechanism, this mechanism operates in an overlapped and interleaved manner to fetch instructions from DC 804 and to read and write operands between CPU 122 and DC 804. In any given CPU cycle, wherein a CPU cycle is defined by the execution of an instruction and is deliniated by successive edges of the CPU Clock (CPUC), an instruction will be fetched and an operand may be read from or written to DC 804.

The start of each CPU cycle is marked by a first, or rising, edge of the CPUC and the sequence of events occurring thereafter depend upon whether an operand read or write is pending. If an operand read or write is pending, an operand read or write address will be provided to DC 804 upon the first edge of CPUC, that is, the CPUC edge starting the CPU cycle, and an instruction address will be provided tc DC 804 60 ns, that is, one System Clock (SYSCLK) period, after the first edge of CPUC. If no operand read or write is pending, the instruction address will be provided to DC 804 at the first edge of CPUC, that is, at the start of the CPU period.

Considering first the reading and writing of operands, in an operand read wherein the operand is encached in DC 804, or in an operand write, the operand will appear on DB Bus 600 upon the next SYSCLK after the address and will be latched into, respectively, CPU 122 or DC 804 upon the next occurring first edge of CPUC, that is, the CPUC edge starting the next CPU cycle. In the case of an operand read wherein the operand is not encached in DC 804 and must be fetched from MM 106, the operand will appear on DB Bus 600 some multiple of SYSCLKs after the address and will again be latched into CPU 122 upon the next occurring first edge of CPUC, that is, at the start of the next occurring CPU cycle.

That is, in any CPU cycle wherein an operand read or write is to be performed, the operand address will be be provided to DC 804 on the edge of CPUC starting that CPU cycle, the operand will appear on DB Bus 600 one or more SYSCLKs after the start of that CPUC, and will be latched into its' destination, either CPU 122 or DC 804, upon the next occurring edge of CPUC which starts a CPU cycle.

In the fetching of instructions, the addressed instruction will normally appear on DB Bus 600 one SYSCLK period after the address, will be latched into IL 704 upon the next occurring second, or falling, edge of CPUC, and will be loaded into IQ 702 upon the next occurring edge of CPUC which starts a CPU cycle if IQ 702 has space to receive the instruction. If IQ 702 is not able to receive the instruction, the instruction will be held in IL 704 until a first edge of CPUC occurs wherein space is available in IQ 702 to receive the instruction.

Considering now the roles of PAR 820, PIAR 822 and IL 704 in the above described operations, it should first be noted that the provision of PAR 822 and PIAR 820 facilitate and make possible the fetching of both an instruction and an operand in a single CPU cycle of 120 ns. That is, the reading or writing of an operand and the reading of an instruction from DC 804 within a CPU cycle of 120 ns requires that DC 804 be provided with two addresses, one for an instruction and one for an operand, within this period.

A single address source, however, can provide only one address in any given 120 ns period. That is, the rate at which logical operations may be executed in the system is determined by SYSCLK, which has a 60 ns period. A single address source would require one SYSCLK period to read an address to DC 804, and a second SYSCLK period to either increment that address or to load a new address. The maximum rate of a single address source is thereby one address every 120 ns.

ATU 802, however, as previously described, provides two address streams, that is, a stream of instruction addresses from PIAR 820 and a stream of operand read/write addresses from PAR 822. As just described, PIAR 820 and PAR 822 may each provide one address every two SYSCLK periods. In ATU 802, however, PIAR 820 and PAR 822 are alternately read and incremented or loaded with new addresses, that is, one is read while the other is being incremented or reloaded, so that PIAR 820 and PAR 822 are together able to provide one address to DC 804 every 60 ns, the addresses being alternately instruction addresses and operand read/write addresses.

Considering now the role of IL 704, it should first be noted that CPU 122 will not, by the nature of its' operations, request the reading of an operand from DC 804 until CPU 122 is ready to receive the operand. That is, CPU 122 will not receive an operand unless CPU 122 has room in its' input buffer to receive the operand. CPU 122 is therefore capable of always moving operands off of DB Bus 600 as soon as they appear thereon, so that DB Bus 600 will always be free to carry the instruction which normally appears thereon in the next SYSCLK period.

In the case of instructions, however, while a new instruction is fetched at every CPU cycle, the instructions do not progress through IQ 702 at an even rate. As such, it is possible that in any given CPU cycle there will not be space in IQ 702 to receive the newly fetched instruction. The provision of IL 704, however, allows fetched instructions to be moved off of DB Bus 600 and saved in IL 704 until space is available in IQ 702, thereby freeing DB Bus 600 for the possible appearance of a next operand.

Having described the structure and operation of the primary instruction and data processing elements of PU 104, that is, CP 602, AGU 124, ATU 802 and DC 804, and their individual and cooperative operations, MS 604 and CPU-SLI 606 will be described next below.

### C.4 Microsequencer (MS) 604 (Fig. 6A)

As previously described, PU 104 is a microcode controlled machine which executes operations on data under the control of processes, that is, under control of instructions received during execution of a program. This microcode control is provided by MS 604 in response, for example, to dispatch addresses provided from AGU 124's DAG 716 and to certain conditions and tests arising during operation of PU 104.

Referring to Fig. 6A, therein is presented a block diagram of MS 604. As previously described, Figs. 6, 7 and 8 may be placed side by side, in that order, to comprise an overall block diagram of PU 104. To continue this overall block diagram, Fig. 6B, containing CPU-SLI 606, may be placed directly below Fig. 6 and Fig. 6A, containing MS 604, placed directly below Fig. 6B, thereby more clearly illustrating the connections and relationships between MS 604, CPU-SLI 606, CP 602, AGU 124 and ATU/C 126.

As shown in Fig. 6A, MS 604 includes a Microroutine Control Store (MCS) 640 for storing microroutines for controlling the operation of PU 104. In the present embodiment, MCS 640 is comprised of two banks of microcode control store, a first bank being comprised of a Read Only Memory (ROM) for storing permanently resided microroutines and the second bank being a read/write memory for loadable microcode. Each bank is, in the present embodiment, an 84 bit wide by 4K word memory.

The writable bank of MCS 640 is provided with a bidirctional data input/output connected from the CPU-SLI 606 internal bus, described further below. This path, together with CPU-SLI 606, SL Bus 120 and SCU 108, is the path by which microcode may be written into or read from MCS 640.

As also shown in Fig. 6A, MCS 640 is provided with an address input connected from Microinstruction Address (MIA) Bus 642. As will be described below, microinstruction addresses are provided through MIA Bus 642 to select and read individual microinstructions from MCS 640 and, during a loading of microcode into MCS 640, to control the writing of microcode into MCS 640.

The microinstruction output of MCS 640 is connected to the input of Microinstruction Generator and Register (MIGR) 644. MIGR 644 contains a register to store the current microinstruction and logic decoding the current microinstruction to provide microinstruction machine control output signals Microinstruction Register (MIR). Outputs MIR are in turn provided to the remainder of PU 104 for control purposes and, as previously described, as a microinstruction literal output to an input of APM 628. A part of MIGR 644's control output is provided as an input to MIGR 644 to control, in part, the operation thereof. MIGR 644 is of conventional internal design and will not be described in further detail herein as such are well known to those of ordinary skill in the art.

Microinstruction addresses may be provided to MIA Bus 642 from either of two address sources having microinstruction address outputs connected to MIA Bus 642. These sources are respectively designated as Microinstruction Address Control 0 (MAC0) 646 and Microinstruction Address Control 1 (MAC1) 648.

Referring first to MAC1 648, MAC1 648 essentially controls the sequential selection of microinstructions in microroutines, the operation of microinstruction stack operations, and microinstruction loop operations. For this purpose, MAC1 648 includes a microinstruction counter, a microinstruction stack and a microinstruction loop counter, with certain associated control

-98-

functions. MAC1 648 is provided with control inputs and microinstruction branch addresses from the output of MCS 640 and microinstruction addresses from MIA Bus 642 as required for the operation thereof. MAC1 640 is further provided with control inputs from Microinstruction Address Select and Control (MASC) 650, described below. MAC1 648 is again of conventional internal design and will not be described in further detail herein.

The operation of MAC1 648 is primarily controlled by MASC 650, which receives, for example, inputs indicating the results of tests, the end of a cycle, and global address select conditions, and control inputs from the output of MIGR 644. Associated with MASC 650 is Test Multiplexer (TSTM) 652, which receives status bit inputs and provides to MASC 650 a test output representing the results of status related tests. Among the outputs generated by MASC 650 are an indication of test condition results, certain control signals to the other elements of MS 604, and certain system clock signals.

Among the clock signals provided by MASC 650, which will be described further in a following description of the fetching of instructions and operands from ATU/C 126, are a System Clock (SYSCLK) and a CPU 122 Clock (CPUC). SYSCLK provides the fundamental timing for logical operations of the elements of PU 104 and, in the present implementation of System 102, has a period of 60 nanoseconds (ns). CPUC is generated in response to the operation of CPU 122 and essentially represents the state of execution of CPU 122 operations. In the present embodiment of System 102, a CPUC cycle is the time required to perform a single operation, that is, to execute a single instruction. As described in detail in a following description of instruction and operand fetching, the start of the execution of an instruction is indicated by a rising edge of CPUC and the end of the CPUC period, that is, the beginning of the next CPUC period, is indicated by the next rising edge of CPUC indicating the start of execution of the next instruction. The basic period of CPUC, that is, the time required to execute a single instruction, is 120 ns. A CPUC period may, however, be extended in 60 ns increments, that is, in SYSCLK periods, as required for certain operations, for example, as the result of a microcode branch or when it is necessary for DC 804 to fetch a requested operand or instruction from MM 106.

Referring now to MACO 646, MACO 646 provides microinstruction addresses upon dispatches and the occurrence of trap conditions or case tests. MACO 646 microinstruction addresses are provided from the output of Microinstruction Address Multiplexer (MIAM) 654 which, in turn, receives inputs from Microinstruction Save/Return Register (SRR) 656 and Case/Trap/Dispatch Generator (CTDG) 658.

Considering first SRR 656, SRR 656 provides a microinstruction address save and return mechanism and is provided with save/return microinstruction addresses from Trap Return Register (TRA) 660. TRA

660, in turn, receives and saves microinstruction addresses appearing on MIA Bus 642 through Execute Microinstruction Address Register (XMIA) 662, which captures and stores the address appearing on MIA Bus 642 of the microinstruction currently to be executed. SRR 656 also provides, as described more fully in the following description of CPU-SLI 606, a path through which microinstruction addresses may be provided to MCS 640 from either SL Bus 120 or CP 602. As shown in Fig. 6A, this path is comprised of an input to SRR 656 from CPU-SLI 606's internal bus, CSI 666, and may be used, for example, in writing microroutines into MCS 640 or in diagnostic operations.

CTDG 658 generates microinstruction addresses upon dispatch, case and trap conditions. As indicated in Fig. 6A, the dispatch address input of CTDG 658 is provided from DAG 716. Other dispatch operations resulting in the generation of microinstruction addresses include dispatch exceptions, for example, resulting from the detection of an invalid address by DAG 716, or operations to select particular file registers or to perform a floating point operation. As will be described below with reference to CPU-SLI 606, CTDG 658 is also provided with an input from CPU-SLI 606, specifically from CPU-SLI 606's SCR 674.

Trap vector microinstruction addresses may result, for example, from an invalid effective address, a long address translation, a cache block crossing, a control exception, a fetch operation, or other general trap conditions. Case tests resulting in a microinstruction address include, for example, operations for normalization of variables, to compare floating point variables or floating point exponent differences, to map the instruction queue, to examine an ALU result, or general control exceptions.

As indicated in Fig. 6A, one input to CTGD 658 is provided from Microinstruction Address Comparator (MIAC) 664. MIAC 664 has a first input connected from XMIA 662 and representing the current microinstruction address and a second input connected from the internal bus of CPU-SLI 606, described further below. A selected microinstruction address may be stored in a CPU-SLI 606 register and compared by MIAC 664 to each current microinstruction address appearing at the output of XMIA662. MIAC 664 will then generate an output to CTDG 658 when the current microinstruction compares to the stored microinstruction address, thereby providing, for example, trip points at selectable microinstruction addresses. This facility may be used, for example, in diagnostic operations for sequentially stepping through microinstruction routines or in halting operation of MS 604 at selected microinstructions.

As described above, MACO 646 generates microinstruction addresses for dispatch, case and trap conditions while MACI 648 generates microinstruction addresses for the sequential selection of microinstructions in microroutines, for microinstruction stack operations and for microinstruction loop operations. Either MACO 646 or MACI 648 may be the microinstruction address source during a given microinstruction cycle and either will provide such an address within a single cycle. The provision of two separate and parallel microinstruction address sources for these two classes of microinstruction selection operations allows, as described below, microcode branch operations to be performed in a single microinstruction cycle.

Microcode branches generally arise from the result of performing a test upon defined conditions or states. If the test result is, for example, true, the current microroutine will continue with the next microinstruction address. If the test is false, a microinstruction address for a branch microroutine is generated and used as the next microinstruction address.

In a conventional microinstruction machine a first microinstruction cycle is used to generate a test condition and a second microinstruction cycle is used to perform the test and select, if necessary, a microinstruction branch. In MS 604, and because of the parallel concurrently operating address sources MACO 646 and MACI 648, the test is generated and performed, by MACO 646, during a single microinstruction cycle. If the test condition is true, the address already generated by MACI 648 is used, during that cycle, as the next microinstruction address. If the test condition is false, the microinstruction cycle is extended and the address generated by MACO 646 used as the next microinstruction address. It should be noted that the test results may be reversed with respect to branch/no branch decisions without altering the principle of operation of MS 604. That is, a true test result may result in a branch and a false result in a no branch.

In as much as a test resulting in a branch uses an extended microinstruction cycle, the overall increase in MS 604 operating speed will be dependent upon the percentage of branches occurring in normal operation. The lower this percentage, the greater the advantage in operating speed. The microcode designer should therefore, by experience or test, select test conditions and construct the microinstruction routines so as to maximize the percentage of test results, whether true or false, resulting in no branch decisions.

Having described the structure and operation of MS 604, the structure and operation of CPU-SLI 606 will be described next below.

## C.5 CPU System Link Interface (CPU-SLI) 606 (Figs. 6A, 6B and 6C)

As previously described, certain elements of System 102, for example, PU 104, SCU 108, MM 106 and SBI 110 are interconnected through Support Link (SL) Bus 120 to provide access and communication between SCU 108 and the internal operations of these elements. This access and communication is used, as described below, primarily to control the execution of what are generally classified as Support operations, for example, the initialization and loading of microcode and diagnostic operations. CPU-SLI 606, for example, is the link between CPU 122 and SL Bus 120 and thereby provides a link between SCU 108 and the elements of CPU 122, in particular CP 602 and MS 604.

While the following description will focus on the example presented by CPU-SLI 606, it should be remembered that the general structure and operation of CPU-SLI 606 is representative of the system link interface provided in each of the information processing elements of System 102. That is, the system link interface in, for example, an MCU 132, will be similar to CPU-SLI 606, with certain adaptations, which will be apparent to those of ordinary skill in the art, for the specific operations and control requirements of the particular information processing element.

In this regard, it should be noted that the information processing elements of System 102 are similar in that each will include information processing functions, including a means for storing information, a means for processing information and busses for transferring the information among the storage and processing means, and a microcode control "engine" similar to MS 604. In this respect, the microcode control engine will include a memory means for storing microroutines, that is, sequences of microinstructions, a means for addressing the microcode memory, microinstruction busses interconnecting the memory and address means.

CP 602 and MS 604 have been described above as, respectively, the information processing function and microcode control engine of CPU 122, wherein RF 616 and ALU 608 provide, respectively, the information storage and processing means. In further example, the function of MEM 106 is to store information, including data and programs, and to transfer information between the elements of System 102. As such, MEM 106 will include a microcode control engine similar to MS 604, storage means in the form of MUs 130, and information processing means, that is, means to transfer information between the MUs 130 and the elements of System 102, in the form of the data paths, registers and processing functions, such as parity checking logic, of MCU 132.

-106-

The following will first describe the general structure and operation of CPU-SLI 606, and then will describe SL Bus 120, the information and commands communicated therethrough, and the Support operations performed by these elements. The description of SL Bus 120 and the Support operations will in turn describe the functions and operations of the elements of CPU-SLI 606 in detail. The structure and operation of SCU 108 will not be described in detail as SCU 108 is a commercially available microprocessor based computer, in the present example a Professional Computer from Wang Laboratories, Inc. of Lowell, MA, and the structure and operation of such a unit and its' adaptation to the present purposes will be well understood by those of ordinary skill in the art after the following descriptions.

Referring to Fig. 6B, a block diagram of CPU-SLI 606 is presented therein. In the following, the structure of CPU-SLI 606 will be described first, followed by a description of certain of the possible operations of CPU-SLI 606 and certain possible uses of the data paths therethrough. As described above, the specific functions and operations of these elements will be described in detail through the following descriptions of SL Bus 120 and the Support Command operations.

As shown therein, CPU-SLI 606 includes a 16 bit CPU Support Link Internal (CSI) Bus 666 which is bidirectionally connected to SL Bus 120 through Support Packet Data Register (SPDR) 668 to allow control and data information to be communicated between SLI Bus 120 and CSI Bus 666. As will be described further below, SPDR 668 is a 16 bit register having a parallel 16 bit input output to CSI Bus 666 and a single bit wide serial input/output connection to the data bus portion of SL Bus 120. That is, information is conducted between SPDR 668 and SCU 108 in serial form and is conducted between SPDR 668 and CSI Bus 666 is 16 bit parallel form.

CSI Bus 666 is in turn, as previously described, bidirectionally connected to AP Bus 612 in CP 602 through 32 bit bidirectional Micro-State Register/Transceiver (MSRX) 670. As indicated in Fig. 6B, MSRX 670 has a 32 bit parallel interface to AP Bus 612 and a 16 bit interface to CSI 666, so that information is transferred between CSI 666 and MSRX 670 in the form of high and low 16 bit "words" of the 32 bits of MSRX 670.

CSI 666 is further interconnected with certain points in MS 604. As shown in Figs. 6A and 6B, CSI 666 is connected from MIA Bus 642 through Micro-Instruction Address Buffer (MIAB) 672. CSI Bus 666 is further connected, also as previously described, to a data input/output of MCS 640 by a bidirectional link and is connected to address inputs of MIAC 664 and SRR 656.

CPU-SLI 606 further includes a 16 bit general purpose Support Command Register (SCR) 674 having an input connected from CSI Bus 666 and an output connected to CSI Bus 666. SCR 674 may be used to store and provide to CSI Bus 666 instructions, addresses or data appearing on CSI Bus 666. In the present case, and as described below, SCR 674 is used to store information controlling the operation of CPU-SLI 666 and MS 604 in performing Support operations. In this regard, and as shown in Figs. 6A and 6B, SCR 674 provides a control signal output to CTDG 658.

Finally, CPU-SLI 606 includes a microcode control "engine", designated as Support Link Control (SLC) 676, which is, as described below, interconnected with the individual support link control lines of SL Bus 120 and provides control outputs Support Link Interface Control (SLIC) to CPU-SLI 606 and MS 604. SLC 676 essentially contains the microroutines and associated logic necessary to control CPU-SLI 606 and MS 604 in performing the below described Support operations. As the design and structure of SLC 676 will be apparent to one of ordinary skill in the art after the following descriptions of the operation of CPU-SLI 606 and the Support operations, SLC 674 will not be described in further detail herein.

Having described the structure of CPU-SLI 606, certain of the possible operations of CPU-SLI 606 and certain possible uses of the information paths through CPU-SLI 606 will be described next below.

Considering first the link from SL Bus 120 to AP Bus 612 through SPDR 668, CSI Bus 666 and MSRX 670, this path may be used, for example, in CP 602 diagnostic operations. That is, this path provides general purpose access between SL Bus 120, and thus, SCU 108, and the internal data and micro state of CP 602.

The bidirectional path between CSI Bus 666 and the data input/output of MCS 640 is the path through which microroutines are written into MCS 640. This path also allows microinstructions to be read, for example, from MCS 640 to SL Bus 120 or to CP 602 through,

respectively, SPDR 668 and MSRX 670 for diagnostic purposes. The path from MCS 640 data input/output and through MSRX 670 also provides an alternate path to that between the MIR output of MIGR 644 and AP Bus 612 whereby microinstruction fields may be read to CP 602.

The path from CSI Bus to an address input of SRR 656, and thus to MIA Bus 642 may be used in cooperation with the above described input/output path between CSI Bus 666 and MCS 640 to provide address inputs to MCS 640 to write microroutines into MCS 640 and to read microinstructions from MCS 640. Microinstruction addresses may be provided through this path from either SL Bus 120 through SPDR 668 or from CP 602 through MSRX 670. In this regard, it should be noted that the address path from MIA Bus 642 to CSI 666 through MIAB 672 may be used, for example, together with the path from the data

-110-

input/output of MCS 640 to CSI Bus 666, to monitor microroutines. That is, that microinstruction addresses appearing on MIA Bus 642 and the corresponding microinstructions read from MCS 640 may thereby be read to SL Bus 120 or to CP 602.

Finally, as previously described MIAC 664 is provided with an address input connected from CSI 666. A selected microinstruction address may be stored in, for example, SCR 674 and provided to MIAC 664 through CSI Bus 666 and this link. This address input may be compared to the microinstruction addresses appearing on MIA Bus 642, for example, at the output of XMIA 662. MIAC 664 will then generate an output to CTDG 658 when the current microinstruction address compares to the stored microinstruction address, thereby providing, for example, trip points at selectable microinstruction addresses. This facility may be used, for example, in diagnostic operations for sequentially stepping through microinstruction routines or in halting operation of MS 604 at selected microinstructions.

Having described the basic structure and operation of CPU-SLI 606, the function and operations of CPU-SLI 606, SL Bus 120 and MS 604 in performing Support operations will be described next below.

Referring to Fig. 6C, therein is presented a diagrammic representation of SL Bus 120 and the information and commands communicated therethrough. As indicated in the upper portion

-111-

thereof, SL Bus 120 is comprised of a single bit serial Target/Command/Data (TCD) Bus 678, which is used to communicate Support operation commands and information between SCU 108 and the information processing elements of System 102, and a plurality of individual control lines.

The individual control lines are used to communicate signals which coordinate the operations of SCU 108 and the information processing elements of System 102, including the transmission from SCU 108 to a processing element of commands directing the execution of Support operations and the transmission from the processing elements to SCU 108 of information resulting from the execution of certain of those operations. The individual control line include, for example, Interrupt Request (IR) Line 680, Support Control Unit Reset (SCUR) Line 682, Support Command Acknowledge (SCA) Line 684, Support Link Clock (SLC) Line 686, Transmit Support Data (TSD) Line 688, and Execute Support Command (XSC) Line 690.

As described above TCD Bus 678 is used to communicate support control data and commands between SCU 108 and the information processing elements of System 102. This information is communicated in the form of 32 bit Target/Command/Data (TCD) Words. It should be noted that, as previously described, TCD Bus 678 is a single bit wide serial bus and SPDR 668 is a 16 bit register. A TCD Word is thereby communicated between SCU 108 and SPDR 668 as two serial transmissions, each of 16 bits. As described below, a TCD Word is accordingly organized into two 16 bit sections, wherein each section contains related information.

Referring to the middle portion of Fig. 6C, a diagrammic representation of the format of a TCD Word is presented therein. As indicated, the first 16 bit section of a TCD Word contains fields identifying the system processor element which is to perform an operation and the operation which is to be performed. For example, the first 10 bits of a TCS Word may contain one or more Target Identification (TI) Fields, each TI Field containing information identifying the intended recipient of a particular TCD Word. For example, bits 8-10 comprise a 3 bit field Central Processor Unit, or PU 104, identification field. This field allows a System 102 to be configured with up to 8 PUs 104 and allows SCU 108 to individually select and communicate with any of the CPUs in a multiple CPU configuration of System 102.

In the present embodiment, the fields of the first 16 bit section which identify an operation to be performed are comprised of a 5 bit Support Command (SC) Field. As stated, the SC Field contains a Support Command Code identifying a particular Support operation to be performed by the recipient element of System 102 identified by the TI Field. In the present example, Support Command Codes (SCs) relevant to CPU 122 include:

0201848

SC00 – Read 16 bits of microcode from the writeable portion of MCS 640 to SPDR 668, for example, to SCU 108; the particular 16 bits are identified by SC00;

SC01 – Read 16 bits from MSRX 670 to the low 16 bits of SPDR 668;

SC02 – Read 16 bits from MSRX 670 to the high 16 bits of SPDR 668;

SC03 – Read 84 bits (1 microinstruction) of writable control store from MCS 640 to CSI Bus 666; the read address specified by the contents of SRR 656;

SC04 – Read the contents of SCR 674 to SPDR 668;

SC05 – Read current microinstruction address to MSRX 670;

SC06 – Read a location in microinstruction memory specified by the contents of SRR 656 to SPDR 668;

SC07 – Spare;

SC08 – Write 16 bits of microinstruction from SPDR 668 to the writeable portion of MCS 640; the location is specified by the current microinstruction address and the portion specified by the contents of SCR 674;

SC09 – Load the low 16 bits from SPDR 668 to MSRX 670;

SC0A – Load the high 16 bits from SPDR 668 to MSRX 670;

SC0B – Load 84 bits (1 microinstruction) from CSI 666 to the writeable portion of MCS 640; the address is specified by the contents of SRR 656;

SC0C – Load SRR 656 from SPDR 668;

SC0D – Load MIAC 664 from SPDR 668;

SC0E – Load SCR 674 from SPDR 668;

SC0F – Load microinstruction memory from SPDR 668; the address specified by the contents of SRR 656;

SC10 – Reset CP 602;

SC11 – Select writeable portion of MCS 640 as input to MIGR 644;

SC12 – Execute Support Command Function trap operation;

SC13 – Execute microinstruction one step at a time (single microinstruction step);

SC14 – Execute macroinstruction one step at a time (single macroinstruction step);

SC15 – Spare;

SC16 – Spare; and,

SC17 – Spare.

Note: SC18, SC19, SC1A, SC1B, SC1C, SC1D, SC1E and SC1F are, in the present exemplary system, either spare or are used for MCU 132 or SBI 110 Support Command operations or are used for Floating Point Unit (FPU) Support Command operations.

-114-

Finally, the second 16 bit section of a TCD Word comprises an information field which may be used, for example and as described above, to communicate data or microinstructions, or to communicate a 16 bit Support Command Register (SCR) Word. As indicated in the above descriptions of Support Commands and the resulting operations, an SCR Word resides in SCR 674 and contains information pertaining to the current Support operation or operations to be executed.

The SCR Word fields in the present example include:

IPTR – A 3 bit field containing a pointer identifying a CPU 122 internal register which is to be a source or destination of an information transfer; for example, the contents of the register may be read to SCU 108, or written by SCU 108;

EMIC – A 1 bit field enabling the operation of MIAC 664;

ECSP – A 1 bit field enabling parity operations with regard to the contents of MCS 640;

CMDM – A 1 bit field indicating that the processing element, that is, CPU 122, is in the Command Mode, that is, is under control of SCU 108; this bit is provided, as described above, to CTDG 658 as a dispatch exception input to transfer control of CPU 122 from the MS 640 microroutines to the Support operation residing in SLC 676; when CMDM is set, the CMDM bit input to CTDG 658 causes MS 604 to enter a dispatch exception loop wherein it may wait for and execute microinstructions or microroutines identified by microinstruction addresses provided by CPU-SLI 606;

EMIS – A 1 bit field enabling single microinstruction step operation; and,

INTR – A 1 bit field indicating that an interrupt request to SCU 108 is pending.

-115-

Having described the structure and information of the TCD and SCR Words, the function and operation of the individual control signals of SL Bus 120 will be described next below.


As previously described, the individual control lines and signals of SL Bus 120 and the Support operations include:


INTR - Interrupt Request - An interrupt request to SCU 108
generated by a processing element attached to SL Bus
120 to indicate that the element is requesting
service, that is, a Support operation, by SCU 108;

SCUR - Support Control Unit Reset - Generated by SCU 108
and monitored by all units connected from SL Bus 120;
when asserted by SCU 108, holds all such processor
elements in the reset state;

SLCA - Support Link Command Acknowledge - Generated by
a recipient of a TCD Word to acknowledge that the
element has received an XSLC command;

SLCK - Support Link Clock - Generated by SCU 108 and used
by all elements connected from SL Bus 120 to
coordinate communications and operations between
the elements and SCU 108; for example, used to clock
the bits of a TCD Word into or from an SPDR 668;

TSLD - Transmit Support Link Data - Generated by SCU 108
to enable all devices connected from SL Bus 120 to
receive information, for example, TCD Words, from
TCC Bus 120; asserted TSLD indicates that SCU 108
is transmitting information to all elements; and, XSLC - Execute Support Link Command - Asserted by SCU 108
and monitored by all elements connected from SL Bus
120; asserted by SCU 108 to indicate that the target
recipient of a TCS Word will execute the command in
its' SCR 674.


Having described the structure and operation of CPU-SLI 606 and SL Bus 120, certain of the Support operations will be described next below.

First considering system initialization, at first power on there will be no microcode or programs resident in the system. The first task of the system, therefore, is to load system microcode into MS 604, initialize the various elements of the system, such as CPU 122, AGU 124 and ATU/C 126, perform system tests, and load and start the first program. These operations are controlled by SCU 108 operating through SL Bus 120 and are performed in three steps: the initiating of Command Mode wherein SCU 108 assumes control of the system to execute the initialization Support operations, the booting of the system, that is, the loading of microcode, and the enabling of program execution..

At the first step, the initiation of Command Mode, SCU 108 performs certain self-test and initialization operations and PU 104 is initialized, by the power on logic, to an initial state. SCU 108 then performs a Support operation to load the Non-Maskable Interrupt (NMI) dispatch exception handler into the writable portion of MCS 640 so that when SCU 108 asserts the Command Mode NMI dispatch exception, CMDM, MS 604 will branch to the NMI handler microroutine.

SCU 108 will then set CMDM, the Command Mode NMI dispatch exception bit in the SCR Word in SCR 674 and will clear SCUR, which was previously set by the power turn on logic. These operations in turn will start running CPU 122's dispatch logic, that is, AGU 124 and CTDG 658, which will try to begin execution of the first

-117-

macroinstruction of a program. CMDM has been asserted, however, and the system will remain in Command Mode with MS 604 remaining in the Command Mode dispatch exception service loop. While CPU 122 is in the Command Mode dispatch exception service loop, SCU 108 may perform all diagnostic routines and, at the end of these routines, will place CPU 122, including AGU 124 and ATU/C 126, into a direct physical addressing state to open a direct path between CPU 122 and MM 106.

In the second step, the system is booted, that is, microcode is loaded. To perform this operation, SCU 108 will load a microinstruction loader routine into the writable portion of MCS 640 and will write a "boot code" routine into MM 106 through the system bus, that is, SB 114. SCU 108 will then initiate execution of the microinstruction loader routine, which in turn will load the boot loader into MCS 640 and the boot loader will begin execution.

At this point, the system is under control of the operational microcode but will remain in the Command Mode dispatch exception service loop until MM 106 is loaded with a program, that is, macroinstructions. Additionally, SCU 108 will initialize AGU 124 and ATU/C 126 to enable the execution of macroinstructions. Once this is accomplished, and MM 106 has been loaded with macroinstructions, SCU 108 will reset or clear CMDM. The clearing of CMDM in SCR 674 will enable a dispatch to the first macroinstruction, located at a known starting address, which will start the system running in the normal mode of operation.

Having described the initialization of System 102 through SCU 108 and the Support operations, certain of the basic Support operation commands will be described next below.

First, the Support operations provide the capability to load and read microinstructions to and from MCS 640. This operation may be performed, for example, in a diagnostic operation or, as described above, in initialization of CPU 122 and requires that MCS 640 be forced into command mode by the assertion of CMDM.

The basic sequence of operations to perform a write of MCS 640 are comprised of:

Loading SRR 656 with the MCS 640 address to be written to. This is accomplished by writing the address in the 16 bit information field of a TCD Word and issuing the Load SRR 656 command code. And,

Moving the data to be written into MCS 640 from SCU 108 to MCS 640 through a series of TCD Words containing the data, in 16 bit sections, and Load WCSX command codes.

The basic sequence of operations to perform a read of MCS 640 are comprised of:

-119-

Loading SRR 656 with the MCS 640 address to be read through a
TCD Word containing the address and the Load SRMR command code. And,

Reading the data from MCS 640 to SCU 108 through a sequence of
TCS Words containing Read WCSX command code and the data, again in
16 bit sections.

Next, the Support operations were previously described as including
the capability of single step execution of microinstructions. This
may be performed in either "panel mode", that is, under direct step
by step control from SCU 108, or in "program mode", that is, by
executing a microroutine a single microinstruction at a time.

CPU 122 must again be forced into Command Mode by the setting of
CMDM, as also previously described, and MCS 640 must contain at
least the NMI handler. Panel mode single step execution of
microinstructions may then be performed by the sequence of
operations:

Loading the MCS 640 writeable input/output register with the
microinstruction to be executed. And,

Selecting the register containing the microinstruction as the
source for the input to MIGR 644.

As soon as the command selecting the MCS 640 register as the source
to MIGR 644 is executed, MIGR 644 is jammed with the single
microinstruction such that it will be executed regardless of which
microinstruction was previously being executed. In order to single
step execute microinstructions, therefore, the branch field of the single stepped microinstruction must be coded to return to the NMI handler. It is possible to execute an entire microroutine in this manner, with the last microinstruction linking back to the NMI handler through its' branch field.

In the panel mode single step execution of microinstructions, the microroutine must be resident in MCS 640. The single step execution of the microroutine is then accomplished by setting the Command Mode NMI bit CMDM and setting EMIS and EMIC to enable MIAC 664 to compare for all microinstruction addresses. This will cause CPU 122 to generate an interrupt for each microinstruction that is executed. It should be noted that the trap for interrupt will occur during the actual execution of the current microinstruction pointed to be the microinstruction address contained in XMIA 662.

During this operation, SCU 108 will be interrupted and will read SPDR 668 to determine that the interrupt was caused as a result of single step operation. As long as this operation is enabled, CPU 122 will generate an interrupt for the next microinstruction. That is, CPU 122 will be executing the single step MIAC 664 trap routine and the trap routine will monitor that CPU 122 is in Command Mode. As long as SCU 108 continues to assert Command Mode, the trap routine will continue looping on itself. Once SCU 108 clears the Command Mode, the trap routine will execute a trap return which will "pop" the trap microinstruction address off the stack and point to the microinstruction to be executed.

-121-

In further example, it was previously described that the Support operations include the capability to execute single macroinstructions. This operation is accomplished by forcing CPU 122 into the Command Mode and issuing the single step macroinstruction command code. CMDM will cause a NMI dispatch exception which will, in turn, suspend operation of CPU 122, that is, MS 604, at the next macroinstruction boundary. SCU 108 will then issue the single macroinstruction command code, which will effectively remove the Command Mode NMI bit CMDM for one macroinstruction cycle time, allowing the execution of the next macroinstruction, and then set CMDM again to stop execution of the next following macroinstruction.

In a last example, the Support operations provide, through MIAC 664, a microinstruction break-point operation. Again, CPU 122 is put into Command Mode by assertion of CMDM and MIAC 664 is loaded through a Load MIAC command sequence as described above. SCU 108 may then release CPU 122 from Command Mode by clearing CMDM, and operation will begin with MIAC 664 operational. Whenever a microinstruction address occurs which compares with the contents of MIAC 664, MIAC 664 will provide an output which will cause a dynamic trap to force MS 640 to the MIAC 640 trap handler. This trap handler will interrupt SCU 108 and inform SCU 108 of the break-point condition.

0201848

The above described invention may be embodied in yet other specific forms without departing from the spirit or essential characteristics thereof. Thus, the present embodiments are to be considered in all respects as illustrative and not restrictive, the scope of the invention being indicated by the appended claims rather than by the foregoing description, and all changes which come within the meaning and range of equivalency of the claims are therefore intended to be embraced therein.

What is claimed is:


1) In an information processing system including system memory means
for storing information and processor means for operating on the
information, cache means for storing a copy of a subset of the
information stored in the system memory means and providing
information therefrom to the processor means, comprising:

cache memory means connected from the system memory means and
to the processor means for storing and providing the copies of the
information contained in the subset, and

write-merge means for writing information from the processor
means to the system memory means, the write-merge means having

first and second inputs connected from the processor
means and the information output of the cache memory means, and

an output connected to the system memory means and
to the information input of the cache memory means, and

responsive to a memory write address referring to
information contained in the copy of the subset residing in the
cache memory means for

reading the corresponding information from the cache
memory means,

merging the information to be written to the system
memory means and the corresponding information read from the cache
memory means,

writing the merged information into the cache memory means, and

providing the merged information to the system memory means.


2) The cache means of claim 1, wherein:

the write-merge means is responsive to a memory write address not referring to information contained in the subset for

providing the information to be written directly to the system memory means.


3) The cache means of claim 1, further comprising:

cache memory read means responsive to a read address referring to information contained in the sub-set for

reading the addressed information from the cache memory means, and

providing the addressed information to the processor means.


4) The cache means of claim 3, wherein the cache memory read means further comprises:

cache memory write means responsive to a read address referring to information not contained in the sub-set for

reading the addressed information from the system memory means, and

writing the information read from the system memory means into the cache memory means to become a part of the subset contained therein.

5) The cache means of claim 4, wherein the cache memory write means further comprises:

cache memory bypass means connected from the cache memory means information input and to the cache memory means information output for providing the information read from the system memory means to the processor means concurrently with the writing of the read information into the cache memory means.

6) The cache means of claim 1, wherein:

information stored in the system memory means and in the cache memory means is contained in memory information units having a fixed size of N bytes,

information operated upon by the processor means is contained in processor information units having a fixed size of n bytes, wherein

n is less than or equal to N, and

a processor information unit may contain less than n bytes of information.

7) The cache means of claim 6, wherein:

the write-merge means is

responsive to a memory write address referring to information contained in a memory information unit which is a member of the copy of the subset residing in the cache memory means for

reading the corresponding memory information unit from the cache memory means,

merging the information bytes from the processor information unit and the bytes of the memory information unit read from the cache memory means not corresponding to the information bytes to provide a new memory information unit, and

writing the new memory information unit into the cache memory means to replace the original memory information unit, and

providing the new memory information unit to the system memory means to be written therein in replacement of the corresponding original memory information unit residing therein.

8) The cache means of claim 7, wherein:

the write-merge means is responsive to a memory write address not referring to information contained in a memory information unit which is a member of the copy of the subset residing in the cache memory means for

-127-

providing the processor information unit containing the information to be written into the system memory means to the system memory means.

9) The cache means of claim 7, further comprising:

cache memory read means responsive to a read address referring to information contained in a memory information unit which is a member of the copy of the subset residing in the cache memory means for

reading the memory information unit containing the addressed information from the cache memory means, and

cache output means responsive to the read address for

extracting the addressed information from the memory information unit read from the cache memory means,

formatting the addressed information into a processor information unit, and

providing the processor information unit containing the addressed information to the processor means.

10) The cache means of claim 7, further comprising:

cache memory write means responsive to a read address referring to information not contained in a memory information unit which is a member of the copy of the subset residing in the cache memory means for

-128-

reading the memory information unit containing the addressed information from the system memory means, and

writing the memory information unit read from the system memory means into the cache memory means to become a part of the subset contained therein.

11) The cache means of claim 10, wherein the cache memory write means further comprises:

cache memory bypass means connected from the cache memory means information input and to the cache memory means information output for providing the memory information unit containing the addressed information at the cache memory means information output concurrently with the writing of the memory information unit into the cache memory means.

12) The cache means of claim 11, further comprising:

cache memory read means connected from the cache memory means information output, and

responsive to a read address referring to information contained in a memory information unit currently being written into the cache memory means to become a a member of the copy of the subset residing in the cache memory means for

extracting the addressed information from the memory information unit provided from the cache memory bypass means,

-129-

formatting the addressed information into a processor information unit, and

providing the processor information unit containing the addressed information to the processor means.

13) In an information processing system including system memory means for storing information, processor means for operating on the information and cache means for storing a copy of a subset of the information stored in the system memory means and providing information therefrom to the processor means, the cache means including cache memory means connected from the system memory means and to the processor means for storing and providing the copies of the information contained in the subset and write-merge means for writing information from the processor means to the system memory means, the write-merge means having first and second inputs connected from the processor means and the information output of the cache memory means and an output connected to the system memory means and to the information input of the cache memory means, a method for writing information from the processor means to the system memory means, comprising the steps of:

responsive to a memory write address referring to information contained in the copy of the subset residing in the cache memory means,

-130-

reading the corresponding information from the cache
memory means,

merging the information to be written to the system
memory means and the corresponding information read from the cache
memory means,

writing the merged information into the cache memory
means, and

providing the merged information to the system memory
means.

14) The method of claim 13, wherein the write-merge means is
responsive to a memory write address not referring to information
contained in the subset for performing the step of:

providing the information to be written directly to the
system memory means.

15) The method of claim 13, wherein the cache means further
comprises cache memory read means responsive to a read address
referring to information contained in the sub-set for performing the
steps of:

reading the addressed information from the cache memory
means, and

providing the addressed information to the processor
means.

-131-

16) The method of claim 15, wherein the cache memory read means further comprises cache memory write means responsive to a read address referring to information not contained in the sub-set for performing the steps of:

reading the addressed information from the system memory means, and

writing the information read from the system memory means into the cache memory means to become a part of the subset contained therein.

17) The method of claim 16, wherein the cache memory write means further comprises cache memory bypass means connected from the cache memory means information input and to the cache memory means information output for performing the step of:

providing the information read from the system memory means to the processor means concurrently with the writing of the read information into the cache memory means.

18) The method of claim 13, wherein:

information stored in the system memory means and in the cache memory means is contained in memory information units having a fixed size of N bytes,

information operated upon by the processor means is contained in processor information units having a fixed size of n bytes, wherein

-132-

n is less than or equal to N, and

a processor information unit may contain less than n bytes of information.


19) The method of claim 18, wherein the write-merge means is

responsive to a memory write address referring to information contained in a memory information unit which is a member of the copy of the subset residing in the cache memory means for performing the steps of:

reading the corresponding memory information unit from the cache memory means,

merging the information bytes from the processor information unit and the bytes of the memory information unit read from the cache memory means not corresponding to the information bytes to provide a new memory information unit, and

writing the new memory information unit into the cache memory means to replace the original memory information unit, and

providing the new memory information unit to the system memory means to be written therein in replacement of the corresponding original memory information unit residing therein.

20) The method of claim 19, wherein the write-merge means is responsive to a memory write address not referring to information contained in a memory information unit which is a member of the copy of the subset residing in the cache memory means for performing the step of:

    providing the processor information unit containing the information to be written into the system memory means to the system memory means.

21) The method of claim 19, wherein the cache means further comprises cache memory responsive to a read address referring to information contained in a memory information unit which is a member of the copy of the subset residing in the cache memory means for performing the steps of:

    reading the memory information unit containing the addressed information from the cache memory means, and

    cache output means responsive to the read address for

    extracting the addressed information from the memory information unit read from the cache memory means,

    formatting the addressed information into a processor information unit, and

    providing the processor information unit containing the addressed information to the processor means.

22) The method of claim 19, wherein the cache means further comprises cache memory write means responsive to a read address referring to information not contained in a memory information unit which is a member of the copy of the subset residing in the cache memory means for performing the steps of:

reading the memory information unit containing the addressed information from the system memory means, and

writing the memory information unit read from the system memory means into the cache memory means to become a part of the subset contained therein.

23) The method of claim 22, wherein the cache memory write means further comprises cache memory bypass means connected from the cache memory means information input and to the cache memory means information output for performing the step of:

providing the memory information unit containing the addressed information at the cache memory means information output concurrently with the writing of the memory information unit into the cache memory means.

24) The method of claim 23, wherein the cache means further comprises cache memory read means connected from the cache memory means information output and responsive to a read address referring to information contained in a memory information unit currently being written into the cache memory means to become a a member of

-135-

the copy of the subset residing in the cache memory means for performing the steps of:

    extracting the addressed information from the memory information unit provided from the cache memory bypass means,

    formatting the addressed information into a processor information unit, and

    providing the processor information unit containing the addressed information to the processor means.

25) In an information processing system including memory means for storing instructions and operands and processor means responsive to the instructions for performing operations on the operands, fetch means for providing the instructions and operands to the processor means, comprising:

    means responsive to operation of the processor means for providing a processor clock signal having

        a first edge at the start of each processor operation, and

        a second edge during the execution of each processor operation,

    address means responsive to operation of the processor means for providing

        a next operand address to the memory means at a first edge of the processor clock signal, and

        a next instruction address to the memory means either at a fixed interval after the first edge of the

-136-

processor clock signal if the address means has provided a next operand address, or

at the first edge of the processor clock signal if the address means has not provided a next operand address, and

means responsive to the processor clock signal for receiving

the next operand from the memory means at the next occurring first edge of the processor clock signal, and

the next instruction from the memory means at the next occurring second edge of the processor clock signal.


26) The fetch means of claim 25, wherein:

the processor means includes

central processor means for performing operations on operands, including

means responsive to the current instruction for providing a logical next instruction address, and

instruction processor means for performing operations on instructions, including

means for generating a logical next operand address, and

the address means further includes

address translation means responsive to logical next instruction addresses and logical next operand addresses for providing corresponding next instruction addresses and next operand addresses,

-137-

next instruction register means responsive to operation of the central processor means for storing and providing a next instruction address, and

next operand register means responsive to operation of the instruction processor means for storing and providing a next operand address.

27) The fetch means of claim 26, wherein:

a logical next instruction address or a logical next operand address comprises

a page number field for information representing an area of the logical address space of a process, and

a byte index field for information representing the location of a byte of information within the logical address area identified by the page number field, and

a next instruction address or a next operand address comprises

a frame number field for information identifying an area of the address space of the memory means, and

a byte index field for information identifying the location of a byte of information within the area of the memory means address space identified by the frame number field,

the page number field and byte index field of a first representation of a next instruction or next operand address corresponding respectively to the frame number field and byte index field of a corresponding next instruction or next operand address.

28) The fetch means of claim 27, wherein:

the next instruction register means and next operand register means are each structured into a frame number area and a byte index area,

the frame number area and the byte index area of each of the next instruction and next operand register means having separately writable inputs, and

the address translation means includes

address translation store means responsive to the logical next instruction and next operand addresses for storing and providing the corresponding next instruction and next operand addresses,

the address output of the address translation store means being structured into a frame number field output and a byte index field output connected respectively to the write frame number and write byte index inputs of the next instruction and next operand register means, and

byte index bypass means connected from the byte index field output of the logical address output of the processor means and to the write byte index inputs of the next instruction and next operand register means for writing byte index fields directly into the next instruction and next operand register means.

-139-

29) The fetch means of claim 25, wherein:

the processor means is responsive to certain instructions to perform operand write operations, wherein

the address means is responsive to an operand write operation of the processor means to provide an operand write address at the first edge of the processor clock signal,

the processor means is responsive to a write operation for providing an operand to be written to the memory means a fixed interval after the first edge of the processor clock signal, and

the memory means is responsive to the operand write address to receive the operand at the next occurring first edge of the processor clock signal.

30) The fetch means of claim 25, wherein:

the processor means includes

central processor means for performing operations on operands, the receiving means including

input register means responsive to the processor clock signal for receiving an operand from the memory means at the next occurring first edge of the processor clock signal, and

instruction processor means for performing operations on instructions, the receiving means including

instruction latch means responsive to the processor

-140-

01848

clock signal for receiving an instruction from the memory means on the next occurring second edge of the processor clock signal.

31) The fetch means of claim 30, wherein the instruction processor means further comprises:

instruction queue means connected from the instruction latch means and responsive to the processor clock signal for receiving an instruction from the instruction latch means on the next occurring first edge of the processor clock signal.

32) The fetch means of claim 31, wherein each instruction is comprised of an operation code field and at least one operand reference field identifying an operand to be operated upon and the instruction processor means further comprises:

dispatch means connected from the instruction queue means and responsive to a current instruction operation code field for providing an output to the central processor means initiating the corresponding operation, and

means responsive to an operand reference field for providing a corresponding logical next operand address, and

the central processor means further includes means responsive to a current instruction for providing a logical next instruction address.

-141-

33) The fetch means of claim 32, wherein the address means further comprises:

address translation means responsive to logical next instruction addresses and logical next operand addresses for providing corresponding next instruction addresses and next operand addresses,

next instruction register means responsive to operation of the central processor means for storing and providing a next instruction address, and

next operand register means responsive to operation of the instruction processor means for storing and providing a next operand address.

34) The fetch means of claim 33, wherein:

a logical next instruction address or a logical next operand address comprises

a page number field for information representing an area of the logical address space of a process, and

a byte index field for information representing the location of a byte of information within the logical address area identified by the page number field, and

a next instruction address or a next operand address comprises

a frame number field for information identifying an area of the address space of the memory means, and

-142-

a byte index field for information identifying the location of a byte of information within the area of the memory means address space identified by the frame number field,

the page number field and byte index field of a first representation of a next instruction or next operand address corresponding respectively to the frame number field and byte index field of a corresponding next instruction or next operand address.

35) The fetch means of claim 34, wherein:

the next instruction and next operand register means are each structured into a frame number area and a byte index area,

the frame number area and the byte index area of each of the next instruction and next operand register means having separately writable inputs, and

the address translation means includes

address translation store means responsive to the logical next instruction and next operand addresses for storing and providing the corresponding next instruction and next operand addresses,

the address output of the address translation store means being structured into a frame number field output and a byte index field output connected respectively to the write frame number and write byte index inputs of the next instruction and next operand register means, and

-143-

byte index bypass means connected from the byte index field output of the logical address output of the processor means and to the write byte index inputs of the next instruction and next operand register means for writing byte index fields directly into the next instruction and next operand register means.

36) In an information processing system including memory means for storing instructions and operands, processor means responsive to the instructions for performing operations on the operands, and fetch means for providing the instructions and operands to the processor means, the fetch means including means responsive to operation of the processor means for providing a processor clock signal, address means responsive to operation of the processor means for providing next instruction addresses and next operand addresses and means responsive to the processor clock signal for receiving instructions and operands, a method for fetching instructions and operands, comprising the steps of:

generating a processor clock signal having

a first edge at the start of each processor operation, and

a second edge during the execution of each processor operation,

providing to the memory means

a next operand address at a first edge of the processor clock signal, and

-144-

a next instruction address either

at a fixed interval after the first edge of the processor clock signal if the address means has provided a next operand address, or

at the first edge of the processor clock signal if the address means has not provided a next operand address, and receiving

the next operand from the memory means at the next occurring first edge of the processor clock signal, and

the next instruction from the memory means at the next occurring second edge of the processor clock signal.


37) The fetching method of claim 36, wherein:

the processor means includes

central processor means for performing operations on operands, including

means responsive to the current instruction for providing a logical next instruction address, and

instruction processor means for performing operations on instructions, including

means for generating a logical next operand address, and

the address means further includes

address translation means responsive to logical next instruction addresses and logical next operand addresses for providing corresponding next instruction addresses and next operand
addresses,

next instruction register means for storing and providing
the next instruction address, and

next operand register means for storing and providing the
next operand address.


38) The fetching method of claim 37, wherein:

a logical next instruction address or a logical next operand
address comprises

a page number field for information representing an area
of the logical address space of a process, and

a byte index field for information representing the
location of a byte of information within the logical address area
identified by the page number field, and

a next instruction address or a next operand address comprises

a frame number field for information identifying an area
of the address space of the memory means, and

a byte index field for information identifying the
location of a byte of information within the area of the memory
means address space identified by the frame number field,

the page number field and byte index field of a
first representation of a next instruction or next operand address
corresponding respectively to the frame number field and byte index
field of a corresponding next instruction or next operand address.

39) The fetching method of claim 38, wherein:

the next instruction register means and next operand register means are each structured into a frame number area and a byte index area,

the frame number area and the byte index area of each of the next instruction and next operand register means having separately writable inputs, and

the address translation means includes

address translation store means responsive to the logical next instruction and next operand addresses for storing and providing the corresponding next instruction and next operand addresses,

the address output of the address translation store means being structured into a frame number field output and a byte index field output connected respectively to the write frame number and write byte index inputs of the next instruction and next operand register means, and

byte index bypass means connected from the byte index field output of the logical address output of the processor means and to the write byte index inputs of the next instruction and next operand register means for writing byte index fields directly into the next instruction and next operand register means.

-147-

40) The fetching method of claim 39, further comprising the steps of:

determining whether a next instruction address or next operand addresses crosses a memory page boundary, and

if the next instruction address or next operand address does not cross a page boundary,

generating a next instruction address or a next operand address by

loading a next instruction address byte index field or next operand address byte index field directly into the next instruction register means or the next operand register means through the byte index bypass means, and

if the next instruction address or next operand address crosses a memory page boundary,

generating a next instruction address or a next operand address by

providing the corresponding next instruction address or next operand address from the address translation means, and

loading the next instruction address byte index field or next operand address byte index field into the next instruction register means or the next operand register means from the address translation means, and

loading the next instruction address frame number field or next operand address frame number field into the

-148-

next instruction register means or the next operand register means from the address translation means.

41) The fetching method of claim 36, wherein the processor means is responsive to certain instructions to perform operand write operations, further comprising the steps of:

in the processor means and responsive to a write operation,

providing an operand write address at the first edge of the processor clock signal,

providing the operand to be written to the memory means a fixed interval after the first edge of the processor clock signal, and

in the memory means and responsive to the operand write address,

receiving the operand at the next occurring first edge of the processor clock signal.

42) The fetching method of claim 36, wherein

the processor means includes

central processor means for performing operations on operands, the receiving means including input register means, and

instruction processor means for performing operations on instructions, the receiving means including

-149-

instruction latch means,

further comprising the steps of:

in the input register means,

receiving an operand from the memory means at the next occurring first edge of the processor clock signal, and

in the instruction latch means,

receiving an instruction from the memory means on the next occurring second edge of the processor clock signal.

43) The fetching method of claim 42, wherein the instruction processor means further includes instruction queue means connected from the instruction latch means, further comprising the step of:

in the instruction queue means,

receiving an instruction from the instruction latch means on the next occurring first edge of the processor clock signal.

44) The fetching method of claim 43, wherein each instruction is comprised of an operation code field and at least one operand reference field identifying an operand to be operated upon and wherein the instruction processor means further comprises

dispatch means connected from the instruction queue means and responsive to a current instruction operation code field for providing an output to the central processor means initiating the corresponding operation, and

-150-

means responsive to an operand reference field for providing a corresponding logical next operand address, and

the central processor means further comprises

means responsive to a current instruction for providing a logical next instruction address.

45) The fetching method of claim 44, wherein the address means further comprises:

address translation means responsive to logical next instruction addresses and logical next operand addresses for providing corresponding next instruction addresses and next operand addresses,

next instruction register means for storing and providing the next instruction address, and

next operand register means for storing and providing the next operand address.

46) The fetching method of claim 45, wherein:

a logical next instruction address or a logical next operand address comprises

a page number field for information representing an area of the logical address space of a process, and

a byte index field for information representing the location of a byte of information within the logical address area identified by the page number field, and

-151-

a next instruction address or a next operand address comprises

a frame number field for information identifying an area of the address space of the memory means, and

a byte index field for information identifying the location of a byte of information within the area of the memory means address space identified by the frame number field,

the page number field and byte index field of a first representation of a next instruction or next operand address corresponding respectively to the frame number field and byte index field of a corresponding next instruction or next operand address.

47) The fetching method of claim 46, wherein:

the next instruction register means and next operand register means are each structured into a frame number area and a byte index area,

the frame number area and the byte index area of each of the next instruction and next operand register means having separately writable inputs, and

the address translation means includes

address translation store means responsive to the logical next instruction and next operand addresses for storing and providing the corresponding next instruction and next operand addresses,

the address output of the address translation store means being structured into a frame number field output and a

-152-

byte index field output connected respectively to the write frame number and write byte index inputs of the next instruction and next operand register means, and

byte index bypass means connected from the byte index field output of the logical address output of the processor means and to the write byte index inputs of the next instruction and next operand register means for writing byte index fields directly into the next instruction and next operand register means.

48) The fetching method of claim 47, further comprising the steps of:

determining whether a next instruction address or next operand addresses crosses a memory page boundary, and

if the next instruction address or next operand address does not cross a page boundary,

generating a next instruction address or a next operand address by

loading a next instruction address byte index field or next operand address byte index field directly into the next instruction register means or the next operand register means through the byte index bypass means, and

if the next instruction address or next operand address crosses a memory page boundary,

generating a next instruction address or a next operand address by

-153-

providing the corresponding next instruction
address or next operand address from the address translation means,
and

loading the next instruction address byte index
field or next operand address byte index field into the next
instruction register means or the next operand register means from
the address translation means, and

loading the next instruction address frame
number field or next operand address frame number field into the
next instruction register means or the next operand register means
from the address translation means.

49) In an information processing system including memory means for
storing instructions and operands and processor means for performing
operations on the operands, microinstruction control means
responsive to the instructions for providing microinstructions for
controlling operation of the processor means, comprising:

microinstruction memory means responsive to microinstruction
addresses for storing and providing the microinstructions,

first microinstruction address means responsive to the
instructions for providing the initial addresses of microinstruction
sequences, and

second microinstruction address means responsive to the
microinstructions for the sequential selection of microinstructions.

-154-

50) The microinstruction control means of claim 49, further comprising:

test condition means for performing tests upon defined conditions of operation of the system and providing an output indicating whether the result of a test is true or false,

the second microinstruction address means being responsive to the test output to provide a next microinstruction address if a test is true, and

the first microinstruction address means being responsive to the test output to provide a new initial microinstruction address if a test is false.

51) The microinstruction control means of claim 49, wherein the first microinstruction address means further comprises:

means responsive to trap conditions and case tests for providing corresponding initial addresses.

52) The microinstruction control means of claim 49, wherein the first microinstruction address means further comprises:

trap means responsive to operation of the microinstruction control means to

save a microinstruction address which is current upon the occurrence of a trap condition, and

return the trapped microinstruction address to the first microinstruction address means to restart the microinstruction

-155-

——

sequence suspended by the trap condition at the point at which the trap condition occurred.

53) The microinstruction control means of claim 49, wherein the first microinstruction address means further comprises:

address comparison means connected from address outputs of the first and second microinstruction address means and having an input for receiving a microinstruction comparison address,

the comparison means being responsive to a current microinstruction address and a comparison address for providing a comparison output to the first microinstruction address means upon a match between a current address and a comparison address.

54) The microinstruction control means of claim 49, wherein the second microinstruction address means comprises:

microinstruction counter means for receiving initial microinstruction addresses and responsive to operation of the microinstruction control means for generating sequential microinstruction addresses,

microinstruction stack means responsive to operation of the microinstruction control means for saving and returning current microinstruction addresses of interrupted microinstruction sequences, and

microinstruction loop counter means for receiving the initial microinstruction addresses of microinstruction loop sequences and to

-156-

the occurrence of a microinstruction loop operation for generating the sequential microinstruction addresses of the microinstruction loop.


55) In a data processing system including a system control means for performing support operations, at least one data processing element including data processing means and microcode control means, and support bus means connected from the system control means for conducting information between the system control means and the data processing elements, processing element support means, comprising:

command register means connected from the support bus means for transferring command words between the element support means and the support bus means,

certain of the command words containing control words containing information directing a current mode of operation of the processing element

control register means connected from the command register means for storing a control word, and

support microcode means responsive to a command word and a related control word for providing microroutines for controlling a support operation,

the processing element microcode control means being responsive to a control word for transferring control of the processing element to the support microcode means.

-157-

0201848

56) The processing element support means of claim 55, wherein:

each command word includes

a first section containing

a target field identifying a recipient processing element, and

a command field identifying a support operation to be executed by the target processing element, and

a second section containing either

a control word, or

information field containing information to be communicated as a result of a current support operation.

57) The processing element support means of claim 56, wherein the the information field contains:

a microinstruction address in the processing element microcode control means,

a microinstruction read from to to be written into the processing element microcode control means, or

data read from or to be written into the data processing means.

58) The processing element support means of claim 55, wherein:

each control word includes

a mode field containing a bit indicating that the processing element is to operate in a command mode, and wherein

-158-

operation of the processing element is controlled by
the support means.

59) The processing element support means of claim 56, wherein:

each control word includes

a mode field containing a bit indicating that the
processing element is to operate in a command mode, and wherein

operation of the processing element is controlled by
the support means.

60) The processing element support means of claim 55, wherein:

the processing element microcode control means includes

microcode memory means for storing microroutines for
controlling non-support operations of the processing means,

means for addressing the microcode memory means, and

microinstruction busses interconnecting the
microcode memory means and microcode address means, and

the support means further comprises

internal bus means connected between the command and
control register means for conducting support operation information,

microinstruction address support means connected between
the internal bus means and the processing element microinstruction
address means for providing processing element microinstruction
addresses thereto.

-159-

61) The processing element support means of claim 60, wherein:

the processing element microcode control means is responsive to microinstruction addresses provided by the microinstruction address support means for executing the corresponding non-support operation microinstructions.

62) The processing element support means of claim 61, wherein the support means further comprises:

microinstruction address comparison means having

a first input connected from the microcode memory addressing means for receiving a current non-support operation microinstruction address and

a second input connected from the internal bus means for receiving and storing a comparison microinstruction address,

for providing to the support microcode means an indication when a current non-support operation microinstruction address compares to a comparison microinstruction address.

63) The processing element support means of claim 62, wherein:

the support microcode means is responsive to a single step microinstruction command and to to the indication output of the microinstruction address means for stopping execution of a microroutine at the end of each microinstruction of the microroutine.

-160-

64) The processing element support means of claim 62, wherein:

the support microcode means is responsive to a single step microroutine command and to to the indication output of the microinstruction address means for stopping execution of a microroutine at the end of the microroutine.

65) The processing element support means of claim 62, wherein:

the support microcode means is responsive to a single step macroroutine command and to to the indication output of the microinstruction address means for stopping execution of a macroroutine at the end of the macroroutine.

66) The processing element support means of claim 62, wherein:

the support microcode means is responsive to a trip point command and to to the indication output of the microinstruction address means for stopping execution of a non-support operation at the microinstruction address corresponding to the comparison address.

67) The processing element support means of claim 60, wherein the support means further comprises:

microinstruction read/write means connected between the internal bus means and the processing element microcode memory means for conducting non-support microinstructions therebetween,

-161-

and is responsive to a microinstruction read/write command to execute a microinstruction read/write support operation, and

the processing element microcode control means is responsive

to microinstruction read addresses provided by the microinstruction address support means for reading non-support microinstructions from the microcode memory means and to the internal bus means, and

to microinstruction write addresses provided by the microinstruction address support means for writing non-support microinstructions from the internal bus means and to the microcode memory means.

68) The processing element support means of claim 55, wherein the processing element includes

means for performing data processing functions, including

means for storing data,

means for processing data, and

and busses for transferring data therebetween, and the support means further comprises

internal bus means connected between the command and control register means for conducting support operation information, and

-162-

data register means connected between the processing element data busses and the internal bus means for conducting data between the processing element and the command register means.

69) The processing element support means of claim 55, wherein:

the support bus means includes

a support information bus, and

a plurality of support control busses, and

the command register means is connected from the support information bus, and

the support microcode means is connected from the support control busses.

70) The processing element support means of claim 69, wherein:

the support information bus is a single bit serial bus,

the support means further includes internal bus means connected between the command and control register means for conducting support operation information,

the internal bus means being a bidirectional multi-bit parallel bus, and

the command register means has

a bidirectional single bit serial connection from the information bus, and

a bidirectional multi-bit parallel connection from
the internal bus means, and

operates as

a serial register with respect to the support
information bus, and

a parallel register with respect to the
internal bus means.


71) The processing element support means of claim 70, wherein:

each command word includes

a first section containing

a target field identifying a recipient processing
element, and

a command field identifying a support operation to
be executed by the target processing element, and

a second section containing either

a control word, or

information field containing information to be
communicated as a result of a current support operation, and

a command word is communicated through the support information
bus in a first serial transmission of the first section and a
following serial transmission of the second section.


72) The processing element support means of claim 69, wherein the
support control busses comprise:


-164-

a support link clock bus for conducting a clock signal for coordinating operation of the system control means and the processing element support means,

a transmit support link data bus for conducting a signal indicating that the system control means is transmitting a command word,

an execute support command bus for conducting a signal indicating that the processing element support means is to execute a support operation specified in a command word,

a support link acknowledgement bus for conducting a signal acknowledging that the processing element support means has received an execute command signal through the execute support command bus,

a support reset bus for conducting a signal that the processing element support means is to place the processing means in a reset state, and

an interrupt request bus for conducting a signal indicating that the processing element support means is requesting that the system control means execute a support operation.

73) The processing element support means of claim 72, wherein:

the processing element support means is responsive to

the clock signal for coordinating its operation with the system control means,

a transmit support link data signal for receiving a command word, an execute support command signal for

executing a support operation specified in a command word, and

transmitting a support link acknowledgement signal acknowledging that the processing element support means has received the execute command signal,

a support reset signal for placing the processing means in a reset state, and

to operation of the processing element and the processing means support means to provide an interrupt request signal to request that the system control means execute a support operation.

74) In a data processing system including a system control means for performing support operations, at least one data processing element including data processing means and microcode control means, support bus means connected from the system control means for conducting information between the system control means and the data processing elements, and processing element support means, including command register means connected from the support bus means, control register means connected from the command register means and support microcode means responsive to a command word and a related control word for providing microroutines for controlling a support operation, the method for performing a support operation, comprising the steps of:

-166-

transferring a command word from the system control means to the command register means through the support bus means,

certain of the command words containing control words containing information directing a mode of operation of the processing element,

storing a control word from the command word in the control register means,

in the processing element, the processing element microcode control means being responsive to the control word, transferring control of the processing element to the support microcode means, and

responsive to the command word, performing the support operation.

FIG. 1

BYTES  0    1    2    3    4    5    6    7

HALFWORD  HALFWORD  HALFWORD  HALFWORD

WORD                    WORD

DOUBLEWORD

*FIG. 2*

RR FORMAT--ONE HALFWORD

| OP CODE | R₁ | R₂ |
|---------|----|----|

0         78   1112  15

*FIG. 3A*

RL FORMAT--TWO HALFWORDS

| OP CODE | R₁ | L₂ | |
|---------|----|----|-|

0         78   1112          31

*FIG. 3B*

RX FORMAT--TWO HALFWORDS

| OP CODE | R₁ | X₂ | B₂ | D₂ |
|---------|----|----|----|----|

0         78   1112  1516  1920        31

*FIG. 3C*

RS FORMAT--TWO HALFWORDS

| OP CODE | R₁ | R₃ | B₂ | D₂ |
|---------|----|----|----|----|

0         78   1112  1516  1920        31

*FIG. 3D*

RRL FORMAT--TWO HALFWORDS

| OP CODE | R₁ OR M₁ | R₃ OR X₂ | L₂ |
|---------|----------|----------|----|

0         78        11 12      15 16      31

*FIG. 3E*

SI FORMAT--TWO HALFWORDS

| OP CODE | I₂ | B₁ | D₁ |
|---------|----|----|----|

0         78        1516  1920        31

*FIG. 3F*

0201848

S FORMAT--TWO HALFWORDS

| OP CODE | - - - - - - - | B₁ | D₁ |
|---|---|---|---|

*FIG. 3G*

0    7 8        15 16  19 20        31

SS FORMAT--THREE HALFWORDS

| OP CODE | L OR L1/L2 | B₁ | D₁ | B2 | D2 |
|---|---|---|---|---|---|

*FIG. 3H*

0        7 8        15 16  19 20  31 32  35 36    47

SSI FORMAT--FOUR HALFWORDS

| OP CODE | L₁ | I | L₂ | B₁ | D₁ | B2 | D2 |
|---|---|---|---|---|---|---|---|

*FIG. 3I*

0      7 8  15 16  23 24  31 32  35 36  47 48  51 52  63

| INTERRUPTION CODE | INSTRUCTION ADDRESS |
|---|---|

0            8                          31

| W | C | P | ///// | I | T | M | B | D | E | S | EM | BT | ///// |
|---|---|---|---|---|---|---|---|---|---|---|---|---|---|

32 33 34 35 36 37 38 39 40 41 42 43 44 45 46 47

STATUS FIELD

RING

| CC | FPO | DO | EU | SG | ///////////////////////////// |
|---|---|---|---|---|---|

48 49 50 51 52 53 54 55 56          61   63

*FIG. 4*

| PAGE FRAME NUMBER | BYTE INDEX |
|---|---|

BITS 0            13          23

*FIG. 5A*

| VIRTUAL PAGE NUMBER | BYTE INDEX |
|---|---|

BITS 0            13          23

*FIG. 5B*

VIRTUAL ADDRESS

| SEGMENT NUMBER | PAGE INDEX | BYTE INDEX |
|---|---|---|

SCR

| PAGE TABLE PHYSICAL ADDRESS | PAGE TABLE LENGTH |
|---|---|

+ (PAGE.INDEX) *2

PAGE TABLE ENTRY

| | PAGE FRAME NUMBER | |
|---|---|---|

PHYSICAL ADDRESS

| PAGE FRAME NUMBER | BYTE INDEX |
|---|---|

*FIG. 5C*

FIG. 6
PART OF
CPU 122

6/11

0201848

FIG. 6A

FIG. 6B

TCD 678
IR 680
SCUR 682
SCA 684
SLC 686
TSD 688
XSC 690

SL BUS 120

| 0 | | | 15 | 16 | | 31 |
|---|---|---|---|---|---|---|
| · · · | | TI FIELD | SC FIELD | | INFORMATION FIELD | |

FIRST SECTION           SECOND SECTION

TCD WORD

| 0 | | | | | | 15 |
|---|---|---|---|---|---|---|
| IPTR | EMIC | ECSP | CMDM | EMIS | INTR | · · · |

SCR WORD

FIG. 6C

FIG. 7

FIG. 7A

FIG. 8

FIG. 8A